# EUROPEAN PATENT APPLICATION

(11) **EP 1 736 894 A1**
(43) Date of publication of application: **27.12.2006**
(21) Application number: 05728054.7
(22) Date of filing: 29.03.2005
(51) Int. Cl.: G06F 17/21

(54) **DIGITIZATION SERVICE MANUAL GENERATION METHOD AND ADDITIONAL DATA GENERATION METHOD**

(30) Priority: 30.03.2004 JP 2004100863
(71) Applicant: VICTOR COMPANY OF JAPAN, LIMITED, Yokohama-shi, Kanagawa-ken, 221-8528 (JP)
(72) Inventor: NUNO, Ikuo, Yokohama-shi Kanagawa 246-0031 (JP); OKUBO, Hatsuo, Kanagawa 225-0014 (JP)
(74) Representative: Dossmann, Gérard
(86) International application number: PCT/JP2005/005880
(87) International publication number: WO 2005/096173

(57) **Abstract**

Disclosed is a technique for generating a useful service manual and for improving the efficiency of data processing related to a service manual. According to this technique, an XML service manual generation control unit 1000 obtains various non-structured data and generates structured data based on the various non-structured data. At this time, structured data is generated based on structure definitions (DTD) that are designated for various non-structured data. Especially, document information is converted into structured data in an XML format and drawing information is converted into structured data in an SVG format, elements in a document and elements in a drawing can be automatically correlated, and an XML service manual wherein information is highly linked is generated. Further, when the generated XML service manual is employed, additional information related to a comment entered by a user, a setup change, etc., is also converted into structured data based on a predetermined structure definition.

## Description

### TECHNICAL FIELD

The present invention relates to an electronic service manual generation method, for generating an electronic service manual that provides detailed information for use as a reference when performing an inspection, maintenance and repair servicing for products that include an electric circuit or an electronic circuit; and an additional data generation method, an electronic service manual generation apparatus, an additional data generation apparatus, an electronic service manual generation program, an additional data generation program and recording media on which these programs are recorded.

### BACKGROUND ART

Conventionally, many manufacturers, including electric appliance and automobile makers, produce a variety of products in which electrically powered systems, such as electric or electronic circuits, are used. Further, provided in correlation with these products are service manuals that provide detailed information for use as a reference for the inspection or the maintenance and repair of products. Ordinarily, such service manuals are publications produced by being printed on paper, but recently, digitized service manuals (electronic service manuals), which can be browsed using PCs (Personal Computers), are increasingly being provided.

Multiple technical drawings, such as circuit diagrams and board diagrams, are inserted into the service manuals. For the technical drawings, which include circuit diagrams and board diagrams, it is requested that the enlarging, reducing or moving of the drawings be enabled during browsing. Therefore, for the electronic service manuals, the use of a vector graphics data format is desired, and, for example, the most common vector graphics data format, PDF (Portable Document Format), is employed.

While most electronic service manuals are those obtained, for example, by directly digitizing a service manual publication printed on paper, there are also electronic service manuals for which a hyperlink, for coupling data, is embedded at a predetermined location so that the display of a circuit diagram, for example, can be quickly changed to display the caption for the circuit diagram.

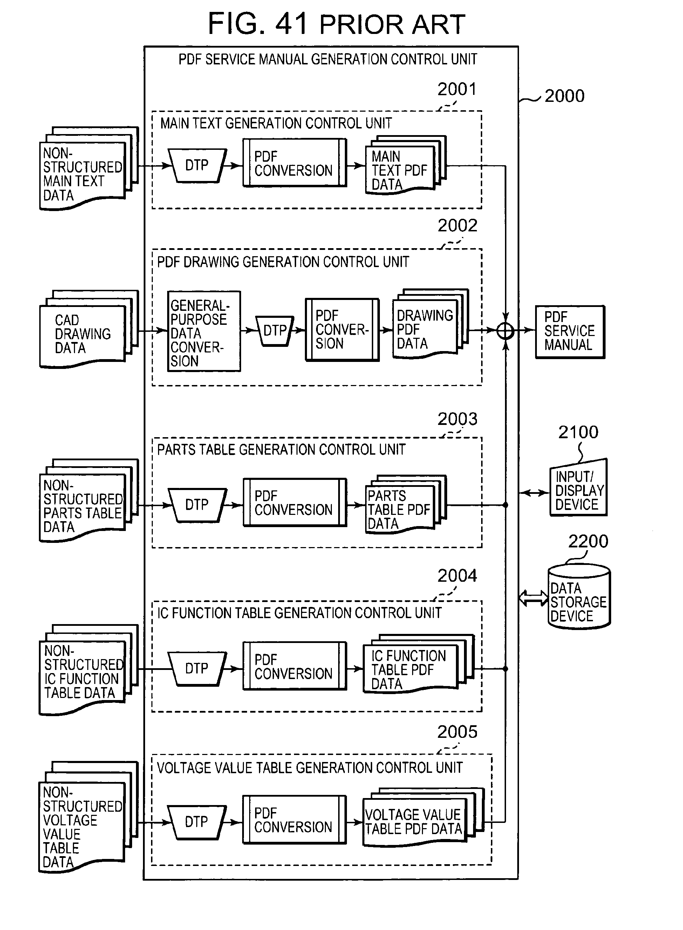

An overview of the generation of an electronic service manual (hereinafter called a PDF service manual) using PDF will now be described while referring to Fig. 41. Fig. 41 is a diagram for explaining an overview of a PDF service manual generation method according to a conventional technique. Ordinarily, a PDF service manual is generated based on non-structured main text data, CAD (Computer Aided Design) drawing data, non-structured parts data, non-structured IC (Integrated Circuit) function table data and non-structured voltage value data. It should be noted that, generally, the term "non-structured" indicates a state wherein a structure is not definitive. In this specification, the term broadly indicates a state wherein the structure is not definitively compared with data finally generated.

A PDF service manual generation control unit 2000 showing in Fig. 41 includes a main text generation control unit 2001, a PDF drawing generation control unit 2002, a parts table generation control unit 2003, an IC function table generation control unit 2004 and a voltage value table generation control unit 2005. Further, the PDF service manual generation control unit 2000 is connected to an input/display device 2100 that permits manipulations by an operator who creates a PDF service manual, and to a data storage device 2200 in which information required for the generation of a document having a PDF format (PDF document) and other information are stored.

The main text generation control unit 2001 has a function whereby an editing and processing operation is performed for non-structured main text data that is fetched by using general-purpose DTP (Desktop Publishing) application software, and data obtained through the editing and processing operation are converted into data having a PDF format, which is the most common electronic document data format. That is, by using the main text generation control unit 2001, the non-structured main text data are converted into main text (main text PDF data) in a PDF format.

Further, the PDF drawing generation control unit 2002 has a function whereby CAD drawing data are converted into two-dimensional general-purpose vector graphics data, the editing and processing operation is performed for the obtained data by using general-purpose application software, and the resultant data are converted into data in a PDF format, the most common electronic document data format. That is, by using this PDF drawing generation control unit 2002, CAD drawing data are converted into drawings in the PDF format (PDF drawing data).

In addition, the parts table generation control unit 2003 has a function whereby the editing and processing operation is performed for non-structured parts data fetched by using general-purpose DTP application software, and data obtained by the editing and processing operation are converted into data in a PDF format, which is the most common electronic document data format. That is, by using this parts table generation control unit 2003, the non-structured parts data are converted into a parts table (PDF parts table data) in a PDF format.

The IC function table generation control unit 2004 has a function whereby the editing and processing operation is performed for non-structured IC function table data that are fetched by using general-purpose DTP application software, and whereby data obtained by the editing and processing operation are converted into data in a PDF format, which is the most common electronic document data format. That is, by using this IC function table generation control unit 2004, the non-structured IC function parts table data are converted into IC function parts (PDF IC parts table data) in a PDF format.

Moreover, the voltage value table generation control unit 2005 has a function whereby the editing and processing operation is performed for non-structured voltage value data that are fetched by using general-purpose DTP application software, and data obtained by the editing and processing operation are converted into data in a PDF format, which is the most common electronic document data format. That is, by using this voltage value table generation control unit 2005, the non-structured voltage value data are converted into a voltage value table (PDF voltage value table data) in a PDF format.

Then, main text PDF data, drawing PDF data, parts table PDF data, IC function table PDF data and voltage value table PDF data, which are obtained through conversion by the main text generation control unit 2001, the PDF drawing generation control unit 2002, the parts table generation control unit 2003, the IC function table generation control unit 2004 and the voltage value table generation control unit 2005 described above, are collected, and the final PDF service manual is generated and output.

Furthermore, for example, in patent document 1, disclosed below, is a parts search system wherein a server and a user terminal are connected across a network, so that the user terminal can issue a product or parts search request to the server, and the server can transmit, to the user terminal, information that is related to a product or part consonant with the search request.
Patent Document 1: Japanese Patent Application Publication No. 2002-99550

However, the above described PDF service manual is basically a static document, and when a hyperlink is to be embedded in the PDF service manual, in order to couple data (cooperation), an electronic service manual producer must perform the secondary operation in advance, i.e., must designate in advance data to be coupled, and moreover, must embed a hyperlink for coupling the data. At present, where there are service manuals for a large variety of products and an extensive number of parts are included in the service manuals, an enormous amount of labor is required to embed hyperlinks in these parts, and the embedding process is very difficult. Furthermore, unless special software for PDF processing is employed, it is impossible for users to additionally write various notes, as remarks, in electronic service manuals.

Furthermore, the parts search system disclosed in patent document 1 is a system wherein the user terminal browses images based on a parts list or a service manual, and an instruction is entered using a mouse to concentrate on the location of a targeted part for a search request, and wherein a server provides an enlarged image for the location designated by a user employing the mouse and detailed information therefor, so as to support the user's search operation. Therefore, it is impossible for an image representing the location of a part to be immediately displayed simply by, for example, referring to the name of the part. Further, for service manuals for electric systems, it is demanded that the location of a predetermined part in a circuit diagram, the location of a predetermined part in a board diagram, and the name and the function of a predetermined part be identified immediately; however, the above described conventional technique can not satisfy this requirement. In addition, a function whereby a user freely writes additional remarks in an electronic service manual is not disclosed in patent document 1.

### DISCLOSURE OF THE INVENTION

In order to resolve the above problems, one objective of the present invention is to provide an electronic service manual generation method, an electronic service manual generation apparatus and an electronic service manual generation program, for generating an electronic service manual superior in usability, and a recording medium on which this program is recorded; and an additional data generation method, an additional data generation apparatus and an electronic service manual generation program, for generating additional data that can clearly express a relation between additional information, which is entered by a user when using an electronic service manual, and the contents of the electronic service manual, and a recording medium on which this program is recorded.

In order to achieve the above objective, according to this invention, for documents (e.g., main text, drawings, a parts table, an IC function table, a voltage value table, etc.) that constitute an electronic service manual, structured data are to be generated by using a structure definition that is specified for each document. It should be noted that the structure definition employed here is provided so that all the structured electronic service manuals that are finally generated can be handled as data, regardless of the drawing data type or the document data type. Furthermore, this structure definition clearly designates a data hierarchical structure, the proper arrangement of indispensable elements, etc., and without performing any process for a generated document at all, enables mutual cooperation for information included in the individual documents that are manipulated by an external script that is added during generation, and cooperation of the information with other data. In addition, the structure definition is provided so that development in the future reinforcement of a function can be easily performed.

Further, according to the present invention, the data format for a document included in an electronic service manual is regarded as an XML (extensible Markup Language) format, and the data format for drawings (circuit diagrams, such as wiring diagrams, board diagrams, mechanism diagrams and block diagrams) included in an electronic service manual is regarded as the SVG (Scalable Vector Graphics) format that is an XML base language for representing two dimensional graphics for a vector format, or the SVGZ format, which is a SVG compression format. Thus, especially the structuring of drawing data, which is impossible for conventional PDF drawings, is possible, and referencing the relationships of parts table data (correlations between individual parts in a parts table and graphics primitives in a drawing) can be automatically performed. And in the process for generating an electronic service manual, keyword information, which is the minimum required for the compatibility of the XML parts table data and the SVG drawing data that are finally generated, can be embedded.

Furthermore, for an arbitrary comment inserted by a user who is using an electronic service manual, or information related to the display setup (e.g., a color setup) for a graphics primitive changed by the user, the structure definition is employed to generate structured data.

Specifically, to achieve the above objective, according to the present invention, provided is an electronic service manual generation method, for permitting a computer to generate an electronic service manual that includes document information and drawing information related to a predetermined product that includes an electric circuit, or an electronic circuit, that employs parts as components, comprising:
an original data acquisition step of the computer obtaining original data serving as contents of the electronic service manual;
a structure definition acquisition step of the computer obtaining structure definition information, in which a structure definition for the electronic service manual is described and which is stored at a location the computer is capable of referencing; and
a structured data generation step of, based on the structure definition information obtained at the structure definition acquisition step, the computer employing the original data obtained at the original data acquisition step to generate structured data that is constituent data of the electronic service manual and that conforms to the structure definition.

Furthermore, according to the present invention, in addition to the above invention, an electronic service manual generation method is provided
whereby, when, at the original data acquisition step, data that serves as main text for the electronic service manual is obtained as the original data at the structure definition acquisition step, main text structure definition information in which a structure definition related to the main text is described is obtained as the structure definition information;
whereby, when, at the original data acquisition step, drawing data in which parts used for the predetermined product are illustrated are obtained as the original data, at the structure definition acquisition step, drawing structure definition information in which a structure definition related to the drawing is described is obtained as the structure definition information;
whereby, when, at the original data acquisition step, parts table data in which a list of the parts used for the predetermined product is described are obtained as the original data, at the structure definition acquisition step, parts table structure definition information, in which a structure definition related to the parts table is described, is obtained as the structure definition information; and
whereby, when, at the original data acquisition step, voltage value table data, in which a list of voltage values for the electric circuit or the electronic circuit used in the predetermined product is described, are obtained as the original data, at the structure definition acquisition step, voltage value table structure definition information, in which a structure definition related to the voltage value table is described, is obtained as the structure definition information.

Further, according to the present invention, in addition to the above invention, an electronic service manual generation method is provided
whereby, when, at the original data acquisition step, data that serves as main text for the electronic service manual is obtained as the original data at the structure definition acquisition step, main text structure definition information in which a structure definition related to the main text is described is obtained as the structure definition information;
whereby, when, at the original data acquisition step, drawing data in which parts used for the predetermined product are illustrated are obtained as the original data, at the structure definition acquisition step, drawing structure definition information in which a structure definition related to the drawing is described is obtained as the structure definition information;
whereby, when, at the original data acquisition step, parts table data in which a list of the parts used for the predetermined product is described are obtained as the original data, at the structure definition acquisition step, parts table structure definition information, in which a structure definition related to the parts table is described, is obtained as the structure definition information;
whereby, when, at the original data acquisition step, IC function table data in which a list of functions of ICs employed for the predetermined product is described are obtained as the original data, at the structure definition acquisition step, IC function table structure definition information, in which a structure definition related to the IC function table is described, is obtained as the structure definition information; and
whereby, when, at the original data acquisition step, voltage value table data, in which a list of voltage values for the electric circuit or the electronic circuit used in the predetermined product is described, are obtained as the original data, at the structure definition acquisition step, voltage value table structure definition information, in which a structure definition related to the voltage value table is described, is obtained as the structure definition information.

Furthermore, according to the present invention, in addition to the above invention, an electronic service manual generation method is provided
whereby, when document data is obtained as the original data at the original data acquisition step, at the structured data generation step, the structured data, in an XML format, is generated by using the document data; and
whereby, when drawing data is obtained as the original data at the original data acquisition step, at the structured data generation step, the structured data are generated in an SVG format or an SVGZ format by using the drawing data.

Further, according to the present invention, in addition to the above invention, provided is an electronic service manual generation method comprising:
a parts-drawing correlation reference step, when at the original data acquisition step parts table data, in which a list of the parts used for the predetermined product is described, and parts drawing data that includes drawings related to the parts are obtained as the original data, of the computer comparing individual parts included in the list of the parts with the drawings wherein the individual parts are illustrated, and generating parts-drawing correlation information that includes the comparison results; and
a parts-drawing correlation addition step of, based on the parts-drawings correlation information generated at the parts-drawings correlation reference step, the computer embedding, in the parts table data, information about the parts written in the parts table data and the drawings that correspond to the parts.

Additionally, according to the present invention, in addition to the above invention, provided is an electronic service manual generation method comprising:
a parts-IC correlation reference step, when at the original data acquisition step parts table data, in which the list of the parts is written, and IC function table data, in which a list of functions of ICs employed for the predetermined product is written, are obtained as the original data, of the computer comparing individual parts included in the parts list with the functions of individual ICs in the list of the IC functions and generating parts-IC functions correlation information that includes the comparison results; and
a parts-IC correlation addition step, of, based on the parts-IC functions correlation information generated at the parts-IC correlation reference step, the computer embedding, in the parts table data, information about the parts written in the parts table data and about the IC functions that correspond to the parts.

Moreover, to achieve the above objective, according to the present invention, provided is an additional data generation method, for a computer that displays, on a display unit, an electronic service manual that includes document information and drawing information related to a predetermined product that includes an electric circuit or an electronic circuit that employs parts as components, whereby, when a user who browses the electronic service manual displayed on the display unit enters, into the computer, additional information related to the electronic service manual, the computer generates additional data based on the additional information, comprising:
a structure definition acquisition step of the computer obtaining structure definition information, in which a structure definition related to the additional information entered by the user is described and which is stored at a location the computer is capable of referencing; and
a structured data generation step of, based on the structure definition information obtained at the structure definition acquisition step, the computer employing the additional information to generate structured data that conforms to the structure definition.

Also, according to the present invention, in addition to the above invention, an additional data generation method is provided
whereby, when a comment by the user is entered into the computer the additional information, at the structure definition acquisition step, my-note structure definition information, in which a structure definition related to the comment is described, is obtained as the structure definition information; and
whereby, when display setup change information for a graphics primitive included in a drawing for the electronic service manual is entered into the computer as the additional information, at the structure definition acquisition step, my-drawing structure definition information, in which a structure definition related to the display setup change information is described, is obtained as the structure definition information.

Also, to achieve the above objective, according to the present invention, provided is an electronic service manual generation program, for permitting a computer to generate an electronic service manual that includes document information and drawing information related to a predetermined product that includes an electric circuit, or an electronic circuit, that employs parts as components, and for permitting the computer to execute:
an original data acquisition step of obtaining original data serving as contents of the electronic service manual;
a structure definition acquisition step of obtaining structure definition information, in which a structure definition for the electronic service manual is described and which is stored at a location the computer is capable of referencing; and
a structured data generation step of, based on the structure definition information obtained at the structure definition acquisition step, employing the original data obtained at the original data acquisition step to generate structured data that is constituent data of the electronic service manual and that conforms to the structure definition.

Furthermore, according to the present invention, in addition to the above invention, an electronic service manual generation program is provided
whereby, when, at the original data acquisition step, data that serves as main text for the electronic service manual is obtained as the original data at the structure definition acquisition step, main text structure definition information in which a structure definition related to the main text is described is obtained as the structure definition information;
whereby, when, at the original data acquisition step, drawing data in which parts used for the predetermined product are illustrated are obtained as the original data, at the structure definition acquisition step, drawing structure definition information in which a structure definition related to the drawing is described is obtained as the structure definition information;
whereby, when, at the original data acquisition step, parts table data in which a list of the parts used for the predetermined product is described are obtained as the original data, at the structure definition acquisition step, parts table structure definition information, in which a structure definition related to the parts table is described, is obtained as the structure definition information; and
whereby, when, at the original data acquisition step, voltage value table data, in which a list of voltage values for the electric circuit or the electronic circuit used in the predetermined product is described, are obtained as the original data, at the structure definition acquisition step, voltage value table structure definition information, in which a structure definition related to the voltage value table is described, is obtained as the structure definition information.

Further, according to the present invention, in addition to the above invention, an electronic service manual generation program is provided
whereby, when, at the original data acquisition step, data that serves as main text for the electronic service manual is obtained as the original data at the structure definition acquisition step, main text structure definition information in which a structure definition related to the main text is described is obtained as the structure definition information;
whereby, when, at the original data acquisition step, drawing data in which parts used for the predetermined product are illustrated are obtained as the original data, at the structure definition acquisition step, drawing structure definition information in which a structure definition related to the drawing is described is obtained as the structure definition information;
whereby, when, at the original data acquisition step, parts table data in which a list of the parts used for the predetermined product is described are obtained as the original data, at the structure definition acquisition step, parts table structure definition information, in which a structure definition related to the parts table is described, is obtained as the structure definition information;
whereby, when, at the original data acquisition step, IC function table data in which a list of functions of ICs employed for the predetermined product is described are obtained as the original data, at the structure definition acquisition step, IC function table structure definition information, in which a structure definition related to the IC function table is described, is obtained as the structure definition information; and
whereby, when, at the original data acquisition step, voltage value table data, in which a list of voltage values for the electric circuit or the electronic circuit used in the predetermined product is described, are obtained as the original data, at the structure definition acquisition step, voltage value table structure definition information, in which a structure definition related to the voltage value table is described, is obtained as the structure definition information.

Furthermore, according to the present invention, in addition to the above invention, an electronic service manual generation program is provided
whereby, when document data is obtained as the original data at the original data acquisition step, at the structured data generation step, the structured data, in an XML format, is generated by using the document data; and
whereby, when drawing data is obtained as the original data at the original data acquisition step, at the structured data generation step, the structured data are generated in an SVG format or an SVGZ format by using the drawing data.

Further, according to the present invention, in addition to the above invention, provided is an electronic service manual generation program that permits the computer to execute:
a parts-drawing correlation reference step, when at the original data acquisition step parts table data, in which a list of the parts used for the predetermined product is described, and parts drawing data that includes drawings related to the parts are obtained as the original data, of comparing individual parts included in the list of the parts with the drawings
wherein the individual parts are illustrated, and generating parts-drawing correlation information that includes the comparison results; and
a parts-drawing correlation addition step, based on the parts-drawings correlation information generated at the parts-drawings correlation reference step, of embedding, in the parts table data, information about the parts written in the parts table data and the drawings that correspond to the parts.

Additionally, according to the present invention, in addition to the above invention, provided is an electronic service manual generation program that permits the computer to execute:
a parts-IC correlation reference step, when at the original data acquisition step parts table data, in which the list of the parts is written, and IC function table data, in which a list of functions of ICs employed for the predetermined product is written, are obtained as the original data, of comparing individual parts included in the parts list with the functions of individual ICs in the list of the IC functions and generating parts-IC functions correlation information that includes the comparison results; and
a parts-IC correlation addition step, based on the parts-IC functions correlation information generated at the parts-IC correlation reference step, of embedding, in the parts table data, information about the parts written in the parts table data and about the IC functions that correspond to the parts.

Moreover, to achieve the above objective, according to the present invention, provided is an additional data generation program, which can be executed by a computer that displays, on a display unit, an electronic service manual that includes document information and drawing information related to a predetermined product that includes an electric circuit or an electronic circuit that employs parts as components, which permits the computer to generate additional data based on additional information when a user who browses the electronic service manual displayed on the display unit enters, into the computer, the additional information related to the electronic service manual, and which permits the computer to execute:
a structure definition acquisition step of obtaining structure definition information, in which a structure definition related to the additional information entered by the user is described and which is stored at a location the computer is capable of referencing; and
a structured data generation step of, based on the structure definition information obtained at the structure definition acquisition step, employing the additional information to generate structured data that conforms to the structure definition.

Also, according to the present invention, in addition to the above invention, an additional data generation program is provided
whereby, when a comment by the user is entered into the computer the additional information, at the structure definition acquisition step, my-notes structure definition information, in which a structure definition related to the comment is described, is obtained as the structure definition information; and
whereby, when display setup change information for a graphics primitive included in a drawing for the electronic service manual is entered into the computer as the additional information, at the structure definition acquisition step, my-drawings structure definition information, in which a structure definition related to the display setup change information is described, is obtained as the structure definition information.

Also, to achieve the above objective, according to the present invention, provided is an electronic service manual generation apparatus, for generating an electronic service manual that includes document information and drawing information related to a predetermined product that includes an electric circuit, or an electronic circuit, that employs parts as components, comprising:
original data acquisition means, for obtaining original data serving as contents of the electronic service manual;
structure definition acquisition means, for obtaining structure definition information, in which a structure definition for the electronic service manual is described and which is stored at a location that is capable of being referenced; and
structured data generation means for, based on the structure definition information obtained by the structure definition acquisition means, employing the original data obtained by the original data acquisition means to generate structured data that is constituent data of the electronic service manual and that conforms to the structure definition.

Furthermore, according to the present invention, in addition to the above invention, an electronic service manual generation apparatus is provided
wherein, when the original data acquisition means obtains, as the original data, data that serves as main text for the electronic service manual, the structure definition acquisition means obtains, as the structure definition information, main text structure definition information in which a structure definition related to the main text is described;
wherein, when the original data acquisition means obtains, as the original data, drawing data in which parts used for the predetermined product are illustrated, the structure definition acquisition means obtains, as the structure definition information, drawing structure definition information in which a structure definition related to the drawing is described;
wherein, when the original data acquisition means obtains, as the original data, parts table data in which a list of the parts used for the predetermined product is described, the structure definition acquisition means obtains, as the structure definition information, parts table structure definition information, in which a structure definition related to the parts table is described; and
wherein, when the original data acquisition means obtains, as the original data, voltage value table data, in which a list of voltage values for the electric circuit or the electronic circuit used in the predetermined product is described, the structure definition acquisition means obtains, as the structure definition information, voltage value table structure definition information, in which a structure definition related to the voltage value table is described.

Further, according to the present invention, in addition to the above invention, an electronic service manual generation apparatus is provided
wherein, when the original data acquisition means obtains, as the original data, data that serves as main text for the electronic service manual, the structure definition acquisition means obtains, as the structure definition information, main text structure definition information in which a structure definition related to the main text is described;
wherein, when the original data acquisition means obtains, as the original data, drawing data in which parts used for the predetermined product are illustrated, the structure definition acquisition means obtains, as the structure definition information, drawing structure definition information in which a structure definition related to the drawing is described;
wherein, when the original data acquisition means obtains, as the original data, parts table data in which a list of the parts used for the predetermined product is described, the structure definition acquisition means obtains, as the structure definition information, parts table structure definition information, in which a structure definition related to the parts table is described;
wherein, when the original data acquisition means obtains, as the original data, IC function table data in which a list of functions of ICs employed for the predetermined product is described, the structure definition acquisition means obtains, as the structure definition information, IC function table structure definition information, in which a structure definition related to the IC function table is described; and
wherein, when the original data acquisition means obtains, as the original data, voltage value table data, in which a list of voltage values for the electric circuit or the electronic circuit used in the predetermined product is described, the structure definition acquisition means obtains, as the structure definition information, voltage value table structure definition information, in which a structure definition related to the voltage value table is described.

Furthermore, according to the present invention, in addition to the above invention, an electronic service manual generation apparatus is provided
wherein, when document data is obtained as the original data by the original data acquisition means, the structured data generation means generates the structured data, in an XML format, by using the document data; and
wherein, when drawing data is obtained as the original data by the original data acquisition means, the structured data generation means generates the structured data, in an SVG format or an SVGZ format, by using the drawing data.

Further, according to the present invention, in addition to the above invention, provided is an electronic service manual generation apparatus comprising:
parts-drawing correlation reference means for, when the original data acquisition means obtains, as the original data, parts table data, in which a list of the parts used for the predetermined product is described, and parts drawing data that includes drawings related to the parts, comparing individual parts included in the list of the parts with the drawings wherein the individual parts are illustrated, and for generating parts-drawing correlation information that includes the comparison results; and
parts-drawing correlation addition means for, based on the parts-drawings correlation information generated at the parts-drawings correlation reference step, embedding, in the parts table data, information about the parts written in the parts table data and the drawings that correspond to the parts.

Additionally, according to the present invention, in addition to the above invention, provided is an electronic service manual generation apparatus comprising:
parts-IC correlation reference means for, when the original data acquisition means obtains, as the original data, parts table data, in which the list of the parts is written, and IC function table data, in which a list of functions of ICs employed for the predetermined product is written, comparing individual parts included in the parts list with the functions of individual ICs in the list of the IC functions, and for generating parts-IC functions correlation information that includes the comparison results; and
parts-IC correlation addition means for, based on the parts-IC functions correlation information generated by the parts-IC correlation reference means, embedding, in the parts table data, information about the parts written in the parts table data and about the IC functions that correspond to the parts.

Moreover, to achieve the above objective, according to the present invention, provided is an additional data generation apparatus, for displaying, on a display unit, an electronic service manual that includes document information and drawing information related to a predetermined product that includes an electric circuit or an electronic circuit that employs parts as components, and for generating additional data based on additional information when a user who browses the electronic service manual displayed on the display unit enters, into the computer, the additional information related to the electronic service manual, comprising:
structure definition acquisition means, for obtaining structure definition information, in which a structure definition related to the additional information entered by the user is described and which is stored at a location that is capable of being referenced; and
structured data generation means for, based on the structure definition information obtained at the structure definition acquisition step, employing the additional information to generate structured data that conforms to the structure definition.

Also, according to the present invention, in addition to the above invention, an additional data generation apparatus is provided
wherein, when a comment by the user is entered into the computer the additional information, the structure definition acquisition means obtains, as the structure definition information, my-notes structure definition information, in which a structure definition related to the comment is described; and
wherein, when display setup change information for a graphics primitive included in a drawing for the electronic service manual is entered into the computer as the additional information, the structure definition acquisition means obtains, as the structure definition information, my-drawings structure definition information, in which a structure definition related to the display setup change information is described.

Also, to achieve the above objective, according to the present invention, a recording medium is provided on which recorded is an electronic service manual generation program, for permitting a computer to generate an electronic service manual that includes document information and drawing information related to a predetermined product that includes an electric circuit, or an electronic circuit, that employs parts as components, and for permitting the computer to execute:
an original data acquisition step of obtaining original data serving as contents of the electronic service manual;
a structure definition acquisition step of obtaining structure definition information, in which a structure definition for the electronic service manual is described and which is stored at a location the computer is capable of referencing; and
a structured data generation step of, based on the structure definition information obtained at the structure definition acquisition step, employing the original data obtained at the original data acquisition step to generate structured data that is constituent data of the electronic service manual and that conforms to the structure definition.

Furthermore, according to the present invention, in addition to the above invention, a recording medium is provided on which recorded is an electronic service manual generation program
whereby, when, at the original data acquisition step, data that serves as main text for the electronic service manual is obtained as the original data at the structure definition acquisition step, main text structure definition information in which a structure definition related to the main text is described is obtained as the structure definition information;
whereby, when, at the original data acquisition step, drawing data in which parts used for the predetermined product are illustrated are obtained as the original data, at the structure definition acquisition step, drawing structure definition information in which a structure definition related to the drawing is described is obtained as the structure definition information;
whereby, when, at the original data acquisition step, parts table data in which a list of the parts used for the predetermined product is described are obtained as the original data, at the structure definition acquisition step, parts table structure definition information, in which a structure definition related to the parts table is described, is obtained as the structure definition information; and
whereby, when, at the original data acquisition step, voltage value table data, in which a list of voltage values for the electric circuit or the electronic circuit used in the predetermined product is described, are obtained as the original data, at the structure definition acquisition step, voltage value table structure definition information, in which a structure definition related to the voltage value table is described, is obtained as the structure definition information.

Further, according to the present invention, in addition to the above invention, a recording medium is provided on which recorded is an electronic service manual generation program
whereby, when, at the original data acquisition step, data that serves as main text for the electronic service manual is obtained as the original data at the structure definition acquisition step, main text structure definition information in which a structure definition related to the main text is described is obtained as the structure definition information;
whereby, when, at the original data acquisition step, drawing data in which parts used for the predetermined product are illustrated are obtained as the original data, at the structure definition acquisition step, drawing structure definition information in which a structure definition related to the drawing is described is obtained as the structure definition information;
whereby, when, at the original data acquisition step, parts table data in which a list of the parts used for the predetermined product is described are obtained as the original data, at the structure definition acquisition step, parts table structure definition information, in which a structure definition related to the parts table is described, is obtained as the structure definition information;
whereby, when, at the original data acquisition step, IC function table data in which a list of functions of ICs employed for the predetermined product is described are obtained as the original data, at the structure definition acquisition step, IC function table structure definition information, in which a structure definition related to the IC function table is described, is obtained as the structure definition information; and
whereby, when, at the original data acquisition step, voltage value table data, in which a list of voltage values for the electric circuit or the electronic circuit used in the predetermined product is described, are obtained as the original data, at the structure definition acquisition step, voltage value table structure definition information, in which a structure definition related to the voltage value table is described, is obtained as the structure definition information.

Furthermore, according to the present invention, in addition to the above invention, a recording medium is provided on which recorded is an electronic service manual generation program
whereby, when document data is obtained as the original data at the original data acquisition step, at the structured data generation step, the structured data, in an XML format, is generated by using the document data; and
whereby, when drawing data is obtained as the original data at the original data acquisition step, at the structured data generation step, the structured data are generated in an SVG format or an SVGZ format by using the drawing data.

Further, according to the present invention, in addition to the above invention, a recording medium is provided on which recorded is an electronic service manual generation program that permits the computer to execute:
a parts-drawing correlation reference step, when at the original data acquisition step parts table data, in which a list of the parts used for the predetermined product is described, and parts drawing data that includes drawings related to the parts are obtained as the original data, of comparing individual parts included in the list of the parts with the drawings
wherein the individual parts are illustrated, and generating parts-drawing correlation information that includes the comparison results; and
a parts-drawing correlation addition step, based on the parts-drawings correlation information generated at the parts-drawings correlation reference step, of embedding, in the parts table data, information about the parts written in the parts table data and the drawings that correspond to the parts.

Additionally, according to the present invention, in addition to the above invention, a recording medium is provided on which recorded is an electronic service manual generation program that permits the computer to execute:
a parts-IC correlation reference step, when at the original data acquisition step parts table data, in which the list of the parts is written, and IC function table data, in which a list of functions of ICs employed for the predetermined product is written, are obtained as the original data, of comparing individual parts included in the parts list with the functions of individual ICs in the list of the IC functions and generating parts-IC functions correlation information that includes the comparison results; and
a parts-IC correlation addition step, based on the parts-IC functions correlation information generated at the parts-IC correlation reference step, of embedding, in the parts table data, information about the parts written in the parts table data and about the IC functions that correspond to the parts.

Moreover, to achieve the above objective, according to the present invention, a recording medium is provided on which recorded is an additional data generation program, which can be executed by a computer that displays, on a display unit, an electronic service manual that includes document information and drawing information related to a predetermined product that includes an electric circuit or an electronic circuit that employs parts as components, which permits the computer to generate additional data based on additional information when a user who browses the electronic service manual displayed on the display unit enters, into the computer, the additional information related to the electronic service manual, and which permits the computer to execute:
a structure definition acquisition step of obtaining structure definition information, in which a structure definition related to the additional information entered by the user is described and which is stored at a location the computer is capable of referencing; and
a structured data generation step of, based on the structure definition information obtained at the structure definition acquisition step, employing the additional information to generate structured data that conforms to the structure definition.

Also, according to the present invention, in addition to the above invention, a recording medium is provided on which recorded is an additional data generation program
whereby, when a comment by the user is entered into the computer the additional information, at the structure definition acquisition step, my-notes structure definition information, in which a structure definition related to the comment is described, is obtained as the structure definition information; and
whereby, when display setup change information for a graphics primitive included in a drawing for the electronic service manual is entered into the computer as the additional information, at the structure definition acquisition step, my-drawings structure definition information, in which a structure definition related to the display setup change information is described, is obtained as the structure definition information.

According to the invention, the electronic service manual generation method, the electronic service manual generation apparatus, the electronic service manual generation program and the recording medium on which this program is recorded provide the effects for generating an electronic service manual that is superior in usability. Further, according to the invention, the additional data generation method, the additional data generation apparatus, the additional data generation program and the recording medium on which this program is recorded provide the effects that, upon the use of the electronic service manual, additional data is generated that can clearly represent a correlation between additional information entered by a user and the contents of the electronic service manual.

### BRIEF DESCRIPTION OF THE DRAWINGS

[Fig. 1] A diagram for explaining an overview of an XML service manual generation method according to one mode of the present invention.
[Fig. 2] A diagram showing an example XML service manual structure definition employed for the mode of the present invention.
[Fig. 3] A diagram showing an example main text structure definition employed for the mode of the present invention.
[Fig. 4] A diagram showing an example SVG drawing structure definition employed for the mode of the present invention.
[Fig. 5] A diagram showing an example parts table structure definition employed for the mode of the present invention.
[Fig. 6] A diagram showing an example IC function table structure definition employed for the mode of the present invention.
[Fig. 7] A diagram showing an example voltage value table structure definition employed for the mode of the present invention.
[Fig. 8] A diagram showing an example my-notes structure definition employed for the mode of the present invention.
[Fig. 9] A diagram showing an example my-drawings structure definition employed for the mode of the present invention.
[Fig. 10] A diagram showing example notes for the structure definitions (DTDs) in Figs. 2 to 9.
[Fig. 11] A diagram for explaining an overview of a my-notes XML data and my-drawings XML data generation method, related to an XML service manual, according to the mode of the present invention.
[Fig. 12] A diagram for a hardware configuration, employed for one mode of the invention, related to the basic application of the present invention.
[Fig. 13] A flowchart showing an overview of a service manual display operation, according to the mode of the invention, related to the basic application of the present invention.
[Fig. 14] A flowchart showing an overview of a display process in a drawing display mode, according to the mode of the invention, related to the basic application of the present invention.
[Fig. 15] A flowchart showing an overview of a display process performed when a user has selected a drawing item on an index page in the drawing display mode, according to the mode of the invention, related to the basic application of the present invention.
[Fig. 16] A flowchart showing a process performed when a graphics primitive in a drawing displayed in a frame A is selected in a double screen display mode, according to the mode of the invention, related to the basic application of the present invention.
[Fig. 17] A first page for a flowchart showing a process performed when a graphics primitive, in a drawing displayed in either frame C or D, is selected in a triple screen display mode, according to the mode of the invention, related to the basic application of the present invention.
[Fig. 18] A second page for the flowchart showing the process performed when the graphics primitive, in a drawing displayed in either frame C or D, is selected in the triple screen display mode, according to the mode of the invention, related to the basic application of the present invention.
[Fig. 19] A first page of a flowchart showing an overview of a display process performed when a part on a parts table page is selected by a user in a drawing display mode, according to the mode of the invention, related to the basic application of the present invention.
[Fig. 20] A second page of the flowchart showing an overview of the display process performed when the part on the parts table page is selected by the user in the drawing display mode, according to the mode of the invention, related to the basic application of the present invention.
[Fig. 21] A diagram showing example index XML data according to the mode of the invention related to the basic application of the present invention, and an example index page generated, based on the index XML data.
[Fig. 22] A diagram showing example parts table XML data according to the mode of the invention related to the basic application of the present invention, and an example parts table page generated, based on the parts table XML data.
[Fig. 23] A diagram showing an example SVG data structure according to the mode of the invention related to the basic application of the present invention.
[Fig. 24] An example circuit diagram to be displayed after SVG data are processed by an SVG viewer, according to the mode of the invention related to the basic application of the present invention.
[Fig. 25] An example board diagram to be displayed after SVG data are processed by the SVG viewer, for the mode of the invention related to the basic application of the present invention.
[Fig. 26] A diagram showing example (example double screen mode) positions of a frame A and a frame B arranged in a browser, according to the mode of the invention related to the basic application of the present invention.
[Fig. 27] A diagram showing example (example triple screen mode) positions of a frame B, a frame C and a frame D arranged in a browser, according to the mode of the invention related to the basic application of the present invention.
[Fig. 28] A diagram showing the state wherein an index page is displayed in the left frame in the browser, and a circuit diagram is displayed in the frame A and a parts table is displayed in the frame B in the double screen mode, for the mode of the invention related to the basic application of the present invention.
[Fig. 29] A diagram showing the state wherein an index page is displayed in the left frame of the browser, and a circuit diagram is displayed in the frame C, a board diagram is displayed in the frame D, and a parts table is displayed in the frame B in the triple screen mode, for the mode of the invention related to the basic application of the present invention.
[Fig. 30] A flowchart showing the processing of information that is the base for the generation of an SVG viewer context menu in the double screen display mode or in the triple screen display mode, according to the mode of the invention related to the basic application of the present invention.
[Fig. 31] A flowchart showing the SVG viewer context menu display processing using a comment function in the double screen display mode or in the triple screen display mode, according to the mode of the invention related to the basic application of the present invention.
[Fig. 32] A first page of a flowchart showing a comment input process in the double screen display mode or in the triple screen display mode, according to the mode of the invention related to the basic application of the present invention.
[Fig. 33] A second page of the flowchart showing the comment input process in the double screen display mode or in the triple screen display mode, according to the mode of the invention related to the basic application of the present invention.
[Fig. 34] A first page of a flowchart showing a comment display process in the double screen display mode or in the triple screen display mode, according to the mode of the invention related to the basic application of the present invention.
[Fig. 35] A second page of the flowchart showing the comment display process in the double screen display mode or in the triple screen display mode, according to the mode of the invention related to the basic application of the present invention.
[Fig. 36] A diagram showing the state wherein the SVG viewer context menu is displayed on the display unit, according to the mode of the invention related to the basic application of the present invention.
[Fig. 37] A diagram showing example comment XML data, according to the mode of the invention related to the basic application of the present invention.
[Fig. 38] A diagram showing an example comment editing screen, according to the mode of the invention related to the basic application of the present invention.
[Fig. 39] A diagram showing an example comment list editing screen, according to the mode of the invention related to the basic application of the present invention.
[Fig. 40] A diagram showing an example comment contents display screen, according to the mode of the invention related to the basic application of the present invention.
[Fig. 41] A diagram for explaining an overview of a conventional PDF service manual generation method.

### BEST MODE FOR CARRYING OUT THE INVENTION

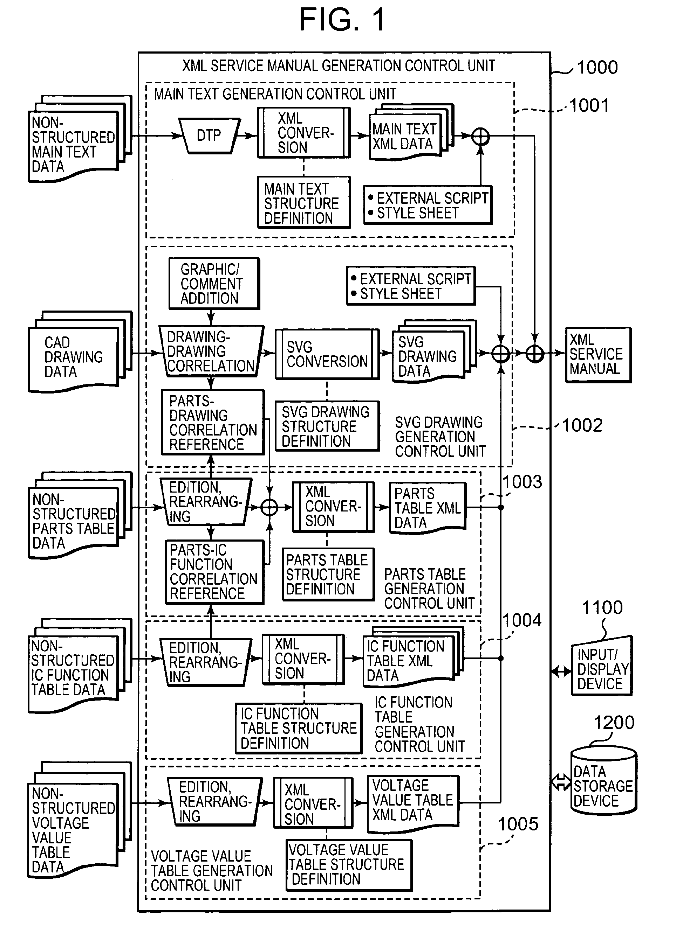

One mode of the present invention will now be described while referring to the drawings. First, while referring to Fig. 1, an explanation will be given for an overview of the generation of an electronic service manual (hereinafter referred to as an XML service manual) using XML. Fig. 1 is a diagram for explaining the overview of an XML service manual generation method according to the mode of the present invention. In the same manner as for the generation a PDF service manual in a conventional example, non-structured main text data, CAD drawing data, non-structured parts data, non-structured IC function table data and non-structured voltage value data are employed to generate an XML service manual.

An XML service manual generation control unit 1000 shown in Fig. 1 incudes a main text generation control unit 1001, an SVG (Scalable Vector Graphics) drawing generation control unit 1002, a parts table generation control unit 1003, an IC function table generation control unit 1004 and a voltage value table generation control unit 1005. Further, the XML service manual generation control unit 1000 is connected to an input/display device 1100, which permits manipulations performed by an operator who creates an XML service manual, and a data storage device 1200, in which information required for the generation of a document (an XML document) in an XML format and other information are stored. It should be noted that the XML service manual generation control unit 1000 can be provided by various types of computers, such as PCs.

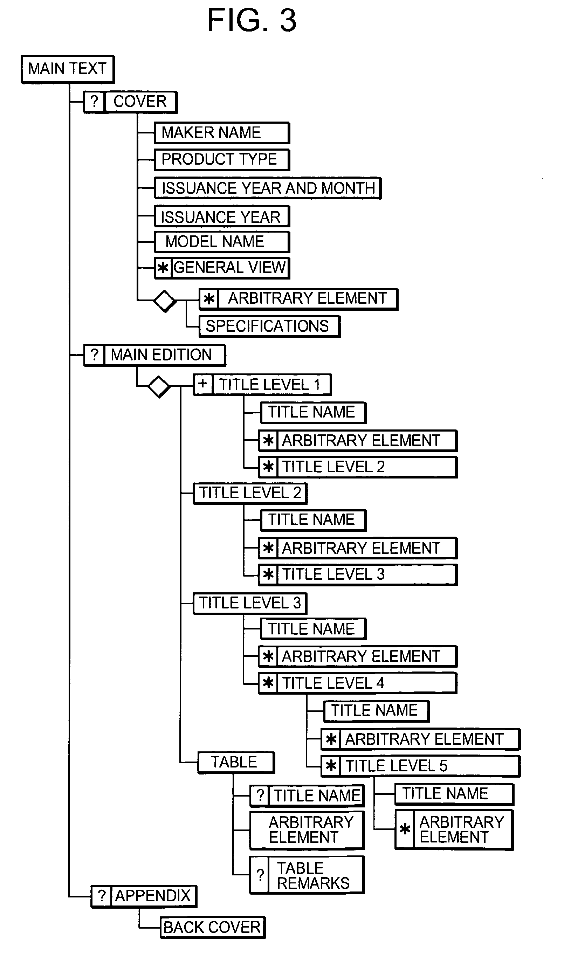

The main text generation control unit 1001 employs general-purpose DTP (Desktop Publishing) application software to perform editing and processing for non-structured main text data that is fetched, and thereafter, converts the edited and processed data into data in an XML format (main text XML data) that conforms to a main text structure definition (see Fig. 3 that will be described later).

Here, the main text structure definition is a DTD (Document Type Definition: structure definition or document type definition) that is defined concerning mark-up elements (sometimes also called tags) used in main text, the order of elements and a hierarchical relation of the elements, and attributes that can be designated for the elements. Not only the above described main text structure definition, but also an SVG drawing structure definition, a parts table structure definition, an IC function table structure definition and a voltage value table structure definition are DTDs, and SVG drawing data, parts table XML data, IC function table XML data and voltage value table XML data that conform to the respective DTDs are generated.

The main text XML data generated by the main text generation control unit 1001 are those that are simply structured and do not have a style to be displayed. Therefore, the main text generation control unit 1001 automatically adds, to the generated main text XML data, a style sheet that is required when the data is to be finally used as an XML service manual, and also automatically adds an external script required for the use of various useful functions.

As described above, the main text generation control unit 1001 has a function for performing a process related to an operation for editing and processing non-structured main text data, a process for the conversion into main text of XML data that conform to a main text structure definition, and a process for adding information in order for it to be used as an XML service manual.

Further, the SVG drawing generation control unit 1002 fetches CAD drawing data and correlates wiring drawings with board drawings. In addition, the SVG drawing generation control unit 1002 adds highlighted displays (e.g., shaded display graphics) in order to display safety designated parts in individual circuit diagrams (parts such that it is requested that designated parts be used during an exchange of parts in order to maintain the safety of a product), or adds a comment. Moreover, a relation is examined between parts table data, processed by the parts table generation control unit 1003, with the CAD drawing data, drawing data in which individual parts are included is detected, and correlation information, which is the detection results, is returned to the parts table generation control unit 1003.

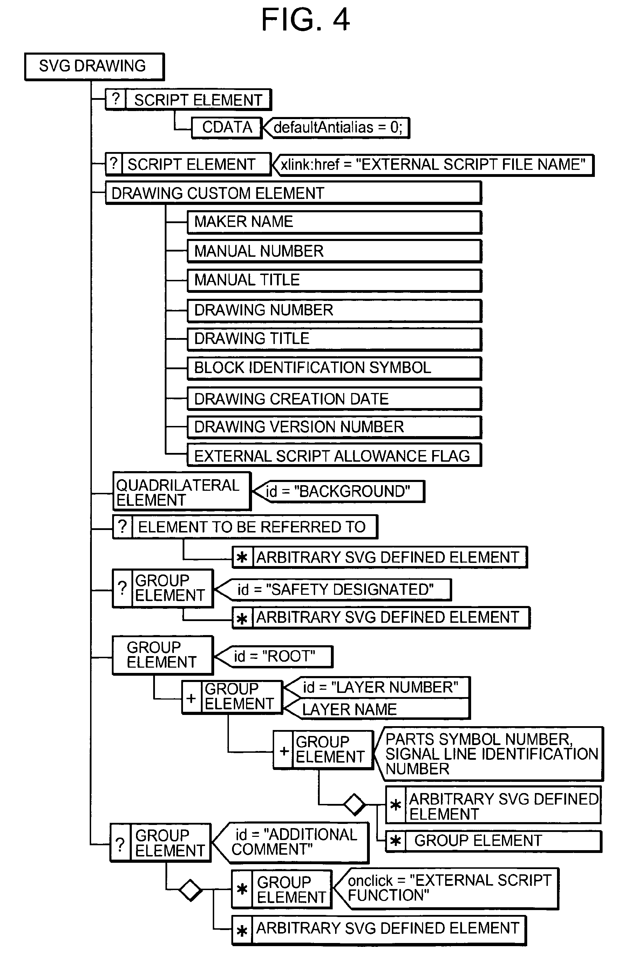

After the correlation operation for the drawing data is completed, the SVG drawing generation control unit 1002 performs the conversion into data in a SVG format (SVG drawing data) that conforms to the SVG drawing structure definition (see Fig. 4 that will be described later), or SVGZ data in a SVG compressed format.

Also for the generated SVG drawing data, as well as for the main text XML data generated by the main text generation control unit 1001, the SVG drawing generation control unit 1002 automatically adds an external script that is necessary in order to use various useful functions that are required when the data are used as the final XML service manual.

Further, the SVG drawing generation control unit 1002 receives data (parts table XML data, IC function table XML data and voltage value table XML data) respectively output by the parts table generation control unit 1003, the IC function table generation control unit 1004 and the voltage value table generation control unit 1005. These XML data are added to the SVG drawing data, and a style sheet, which is required when the individual XML data that do not have a display format are employed as the final XML service manuals, and an external script that interacts with the SVG drawing data are automatically added.

It should be noted that the external script is indispensable for the provision of various useful functions when a structured XML service manual is utilized as data. An XML service manual, viewed from the script side, includes XML data and SVG drawing data that are uniformly generated in accordance with a predetermined structure definition, regardless of the drawing type or the document type, and handling (accessing data) is simple. Further, when various types of information included in the structured XML data and SVG drawing data are employed in a chained manner, mutual cooperation of the information is enabled in a condition wherein any process at all is performed for generated data, and also, future development, such as an addition of a function, is easily performed.

As described above, the SVG drawing generation control unit 1002 has a function for employing CAD drawing data to perform a process related to the correlation of individual drawings, and the correlation of parts in the drawings with items in parts table data, and thereafter the performance of a conversion process, to obtain SVG drawing data that conforms to the SVG drawing structure definition, a unification process, for SVG drawing data, parts table XML data, IC function table XML data and voltage value table XML data, and a process for adding information in order for it to be used as an XML service manual.

Furthermore, the parts table generation control unit 1003 fetches non-structured parts table data, performs editing and processing for non-structured parts table data and the rearranging of data, and transmits the obtained parts data to the SVG drawing generation control unit 1002. As described above, the SVG drawing generation control unit 1002 examines a relation between parts table data and CAD drawing data, and generates correlation information that indicates a correlation relative to drawing data in which the individual parts are included. The correlation information generated by the SVG drawing generation control unit 1002 is transmitted by the SVG drawing generation control unit 1002 to the parts table generation control unit 1003, and based on the correlation information, drawing data file names corresponding to the individual parts are automatically inserted into predetermined locations (predetermined items) in corresponding parts tables.

Further, a relation between IC function table data and parts table data processed by the IC function table generation control unit 1004 is examined, correlation information that indicates a correlation relative to IC function table data corresponding to the individual parts is obtained, and based on the correlation information, IC function table data file names are automatically inserted into predetermined locations (predetermined items) in corresponding parts tables.

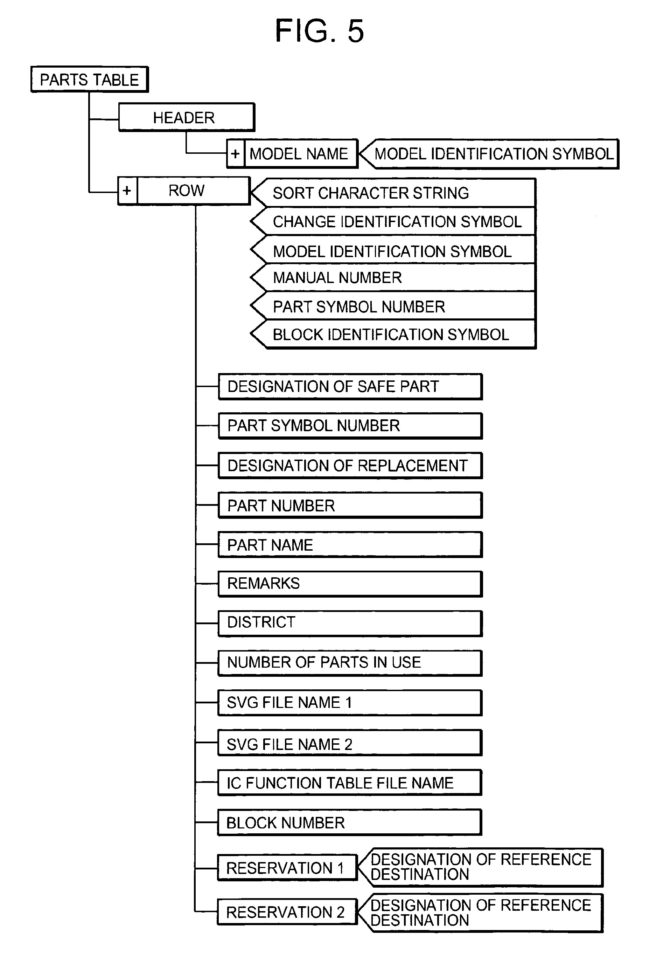

Furthermore, the parts table generation control unit 1003 converts, into XML data (parts table XML data) that conforms to the parts table structure definition (see Fig. 5 that will be described later), parts table data into which information has been inserted based on correlation information that indicates a correlation relative to drawing data in which individual parts are included, and correlation information that indicates a correlation relative to IC function table data that corresponds to the individual parts.

As described above, the parts table generation control unit 1003 has a function for performing a process related to the editing and processing of non-structured parts table data, a process related to the correlation of the individual parts with IC function table data, and a process for inserting information based on correlation information for parts and drawings and correlation information for parts and IC functions, and thereafter performing a conversion process to obtain parts table XML data that conforms to the parts table structure definition.

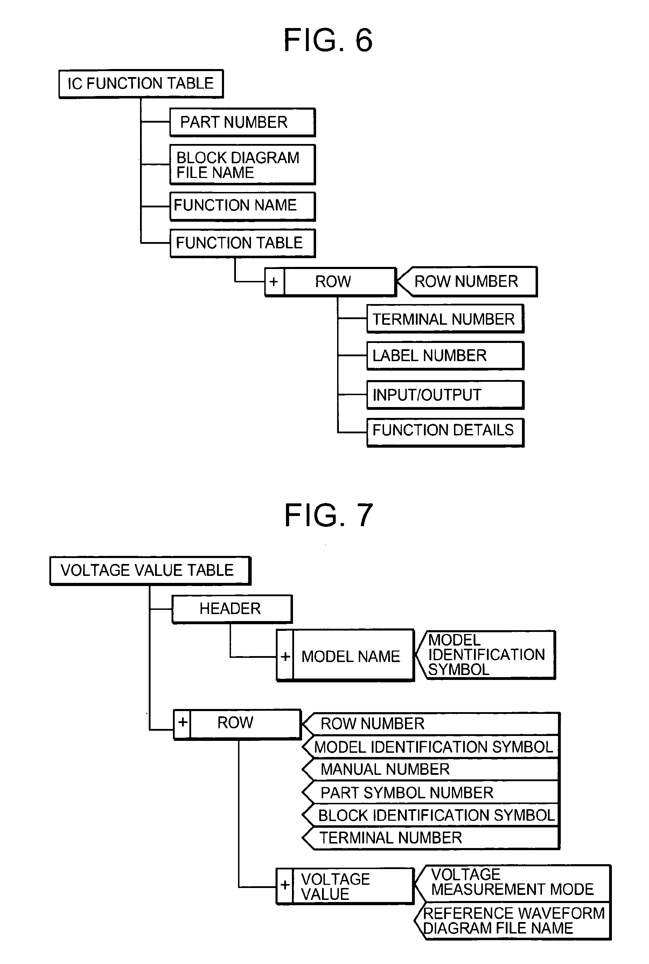

In addition, the IC function table generation control unit 1004 fetches non-structured IC function table data, and performs an editing and processing operation for the non-structured IC function table data and a data rearranging operation. Then, the obtained IC function table data is converted into XML data (IC function table XML data) that conforms to the IC function table structure definition (see Fig. 6 that will be described later). It should be noted that the IC function table data obtained through the editing and processing operation and the data rearranging operation are supplied to the parts table generation control unit 1003, and are employed by the parts table generation control unit 1003 to generate correlation information for the parts and the IC functions described above.

As described above, the IC function table generation control unit 1004 has a function for performing a process related to the editing and processing of the non-structured parts table data, and thereafter performing a conversion process to obtain XML IC function table data that conforms to the IC function table structure definition.

Moreover, the voltage value table generation control unit 1005 fetches non-structured voltage value table data and performs an editing and processing operation, for the non-structured voltage value table data, and a data rearranging operation. Then, the obtained voltage value table data is converted into XML data (voltage value table XML data) that conforms to the voltage value table structure definition (see Fig. 7 that will be described later).

As described above, the voltage value table generation control unit 1005 has a function for performing the editing and processing operation for the non-structured voltage value table data, and for thereafter performing a conversion process to obtain XML voltage value table data that conforms to the voltage value table structure definition.

And finally, the XML service manual generation control unit 1000 outputs, as a structured XML service manual, the main text XML data generated by the main text generation control unit 1001 and the SVG drawing data, parts table XML data, the XML IC function table data and the XML voltage value table data that are unified by the SVG drawing generation control unit 1002.

For the XML service manual that is generated and output by the XML service manual generation control unit 1000 in the above described manner, all the constituent documents are XML structured data. Therefore, while a conventional service manual (e.g., a PDF service manual) is basically constituted by static documents, the XML service manual can be interactively and actively employed by using an external script. Furthermore, during a product repair and maintenance operation, the working efficiency can be improved by using the XML service manual.

Further, for the generation of the XML service manual, various types of fundamental non-structured data are converted, based on structure definitions (DTDs) that are predesignated, and an XML data display style sheet and an external script that are prepared in advance are automatically added. Thus, a uniform and functional service manual can be easily generated.

In addition, for example, the contents of an XML service manual can be displayed on the display unit of a computer, such as a PC (Personal Computer) that executes a predetermined electronic service manual display program (service manual display XML program). Also, a user (reader) who browses an XML service manual displayed on the display unit can quickly and exactly obtain desired information by using an operation input portion (e.g., a mouse or a keyboard) connected to the computer.

Further, a user can freely write a comment or insert a hyperlink into a drawing or a graphics primitive included in an XML service manual, and can also change the color of each graphics primitive in a drawing. Comment information or color information added by the user in this manner can be also generated as XML data that conforms to a predetermined structure definition.

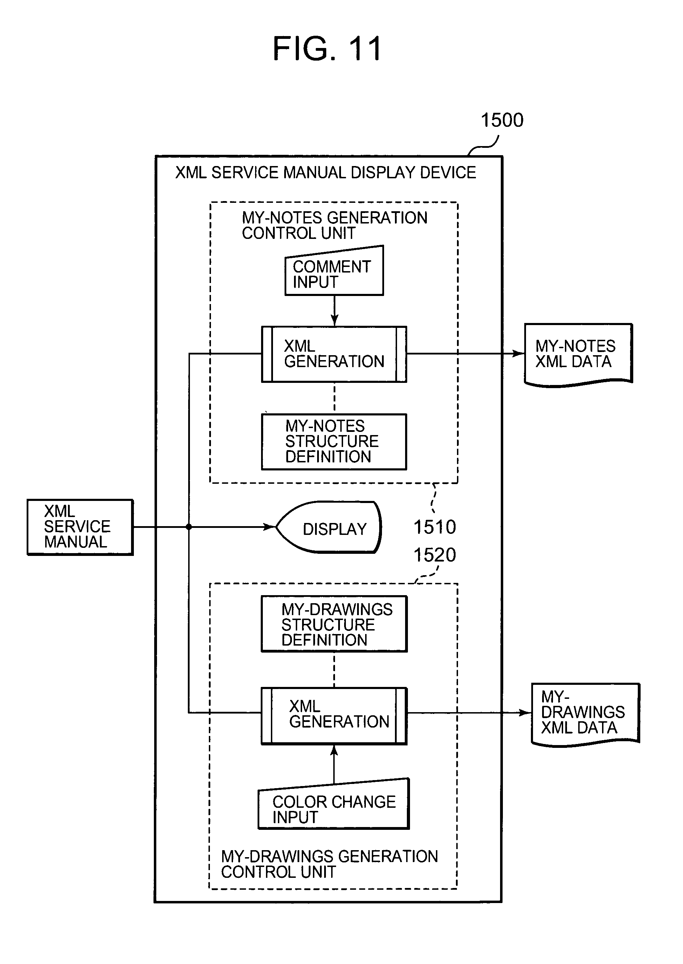

While referring to Fig. 11, an explanation will be given for an overview of the generation of XML data (my-notes XML data) that includes comment information additionally entered by a user and XML data (my-drawings XML data) that includes color information for a graphics primitive additionally designated by a user. Fig. 11 is a diagram for explaining the overview of a my-notes XML data and a my-drawings XML data generation method for an XML service manual according to the mode of the present invention.

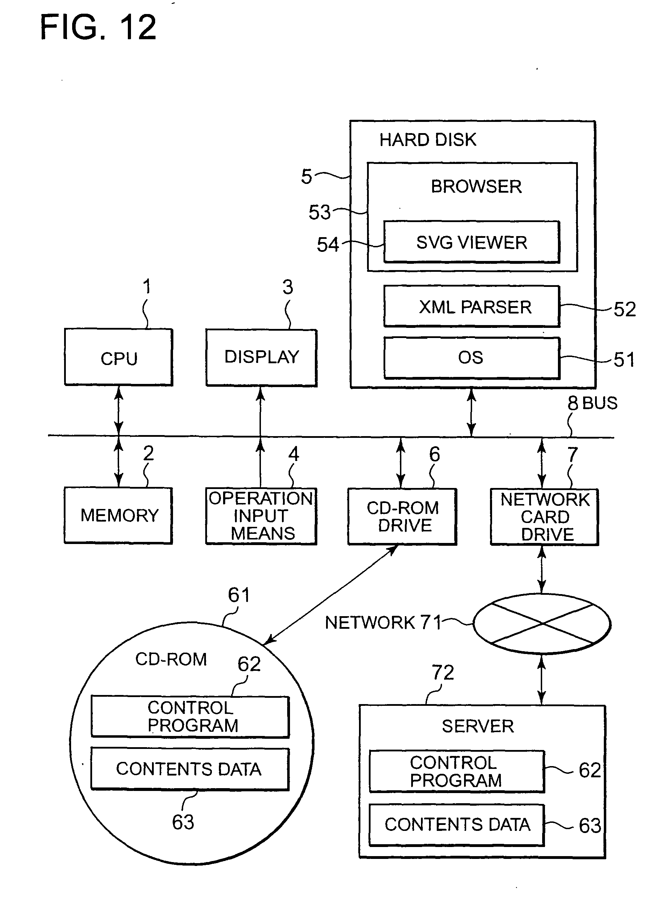

An XML service manual is read, for example, by an XML service manual display device 1500 in Fig. 11, and displayed on a display unit. Although not shown in Fig. 11, a user can perform various manipulations, while browsing the XML service manual displayed on the display unit. Further, the XML service manual display device 1500 in Fig. 11 has, for example, a hardware configuration shown in Fig. 12, which will be described in detail later.

The XML service manual display device 1500 in Fig. 11 includes a my-notes generation control unit 1510 and a my-drawings generation control unit 1520.

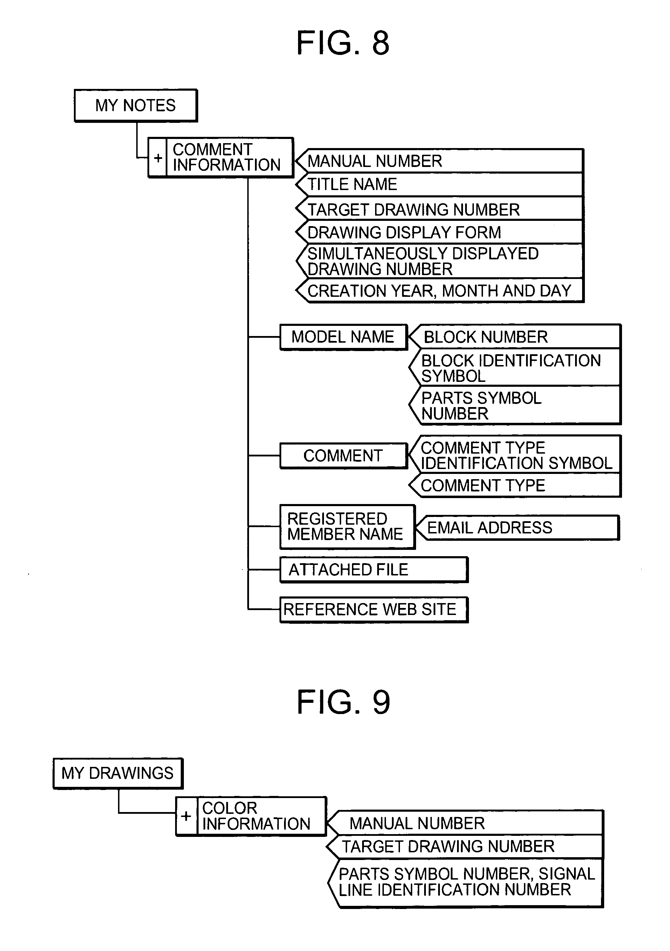

When a user has written a comment for a desired drawing or graphics primitive, the my-notes generation control unit 1510 obtains information related to the drawing or the graphics primitive that is the comment target, and employs information for the drawing or the graphics primitive and the comment information to generate XML data (my-notes XML data) that conforms to the my-notes structure definition (see Fig. 8 that will be described later).

As described above, the my-notes generation control unit 1510 has a function whereby my-notes XML data that conforms to the my-notes structure definition is generated based on arbitrary information that the user has inserted for a drawing or a graphics primitive and information that is related to the drawing or the graphics primitive that is the information insertion target.

Further, when a user has changed a color for a desired graphics primitive, the my-drawings generation control unit 1520 obtains information related to the graphics primitive that is the color change target, and employs the information for the graphics primitive and color information to generate XML data (my-drawings XML data) that conforms to the my-drawings structure definition (see Fig. 9 that will be described later).

As described above, the my-drawings generation control unit 1520 has a function whereby my-drawings XML data that conforms to the my-drawings structure definition is generated based on color information the user has designated for a graphics primitive and information for the graphics primitive that is the color designation target.

For the generation of the my-notes XML data generated by the my-notes generation control unit 1510, and the my-drawings XML data generated by the my-drawings generation control unit 1520, as well as for the XML service manual, data conversion is performed based on the structure definition (DTD), and an XML data display style sheet and an external script that are prepared in advance are automatically added. Thus, information arbitrarily inserted or designated by a user can also be provided as uniform and functional data.

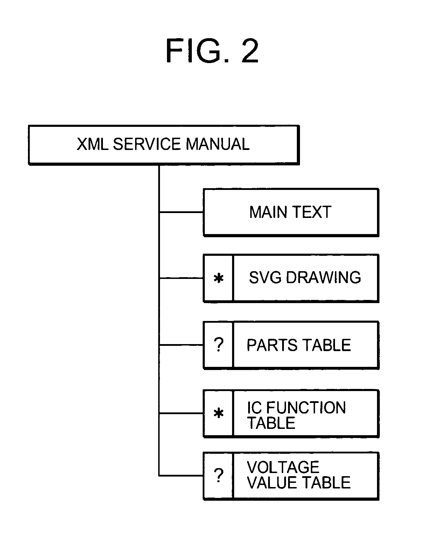

Next, while referring to Figs. 2 to 10, an explanation will be given for DTDs that define the structure of XML data generated in this invention. It should be noted that XML data generated using the DTD can be generalized, and can also serve as highly structured data. That is, a DTD is a definition commonly used by many users and processing apparatuses, and XML data generated based on the definition is very versatile and very useful for data sharing and data processing.

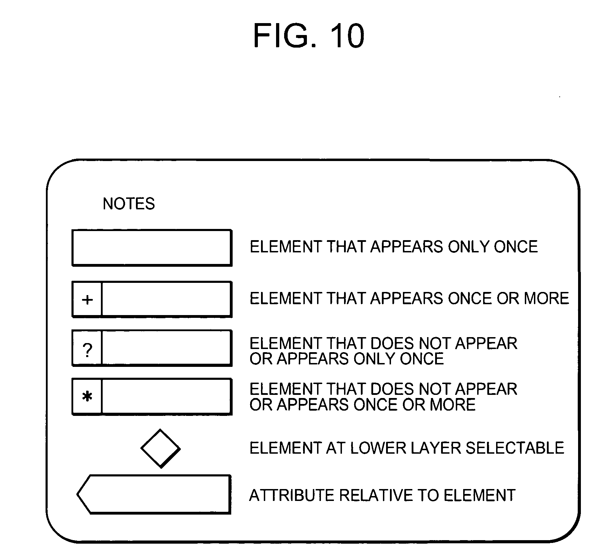

Further, the individual elements of the DTDs in Figs. 2 to 9 are shown based on the notes in Fig. 10. As shown in Fig. 10, a rectangular frame indicates an element that appears only once. A rectangular frame with a + sign added indicates an element that appears once or more. A rectangular frame with a symbol ? added indicates an element that appears 0 times or only once. A rectangular frame with a symbol * added indicates an element that appears 0 times or appears once or more (nil or more). Further, a small square indicates that each element present at a lower layer can be arbitrarily selected. A pentagon frame indicates an attribute for an element.

### <XML Service Manual Structure Definition>

First, an XML service manual structure definition shown in Fig. 2 will be described. Fig. 2 is a diagram showing an example XML service manual structure definition employed for the mode of the present invention. It should be noted that, in Fig. 2, the DTD for the entire XML service manual is typically shown by using a tree structure.

"XML service manual" in Fig. 2 is a root element (a topmost element that does not have a parent element) throughout the XML service manual that is formed of structured sentences.

Further, "main text" is an element of the main text that appears only once in the layer below "XML service manual", where sentences (text) are written in order to explain the disassembly procedures or the assembly procedures, and adjustment manuals for a predetermined product (a target product for this XML service manual; hereinafter also called a target product). It should be noted that this "main text" corresponds to the main text structure definition that the main text generation control unit 1001 in Fig. 1 refers to. The structure (see Fig. 3) of the "main text" will be described later in detail.

Furthermore, "SVG drawing" is an element that appears 0 times or more in the layer below "XML service manual", and that includes SVG data related to drawings, such as wiring drawings, board diagrams, mechanism diagrams and block diagrams, for a predetermined product. It should be noted that this "SVG drawing" corresponds to the SVG drawing structure definition that the SVG drawing generation control unit 1002 in Fig. 1 refers to. Further, the structure (see Fig. 4) of the "SVG drawing" will be explained later in detail.

In addition, a "parts table" is an element that appears 0 times or only once in the layer below "XML service manual", and an element for a parts table where, for example, information about individual parts that constitute a predetermined product is entered. It should be noted that this "parts table" corresponds to the parts table structure definition that the parts table generation control unit 1003 in Fig. 1 refers to. The structure (see Fig. 5) of the "parts table" will be described in detail later.

Moreover, "IC function table" is an element that appears 0 times in the layer below "XML service manual", and is an element of an IC terminal function table where, for example, information for individual ICs arranged in a predetermined product is entered. It should be noted that this "IC function table" corresponds to the IC function table structure definition that the IC terminal function table generation control unit 1004 in Fig. 1 refers to. And the structure (see Fig. 6) of the "IC function table" will be described later in detail.

Also, "voltage value table" is an element that appears 0 times or only once in the layer below "XML service manual", and an element of a voltage value table where voltage values for primary wiring, circuits, IC terminals, etc., in a predetermined product are entered. It should be noted that this "voltage value table" corresponds to the voltage value table structure definition that the voltage value table generation control unit 1005 in Fig. 1 refers to. Further, the structure (see Fig. 7) of the "voltage value" will be described later in detail.

Since the structure definition (DTD) that generates a uniform and functional service manual is designated in this manner, a structured service manual (service XML manual) can be generated based on this structure definition.

### <Main Text Structure Definition>

A main text structure definition in Fig. 3 will now be explained. Fig. 3 is a diagram showing an example main text structure definition used for the mode of the present invention. It should be noted that, in Fig. 3, the DTD for main text is typically shown by using a tree structure.

"Main text" shown in Fig. 3 corresponds to an element (see Fig. 2) present in the layer below "XML service manual" described above, and is a root element of the main text where sentences (text) are written to explain the disassembly procedures or assembly procedures and adjustment manuals for a predetermined product.

Further, elements "cover", "main edition" and "appendix" are present below the root element "main text". "Cover" is the element for the cover portion of the XML service manual that appears 0 times or only once in the layer below "main text". "Main edition" is the element for the main edition portion of the XML service manual that appears 0 times or only once in the layer below "main text". "Appendix" is the element for the back cover portion of the XML service manual that appears 0 times or only once in the layer below "main text". Further, "cover", "main edition" and "appendix" include the following elements, respectively.

Elements "Maker name", "product type", "issuance year and month", "issuance year", "model name", "general view", "arbitrary element" and "specifications" are present below element "cover".

"Maker name" is an element for writing the name of a maker that issues a service manual. "Product type" is an element for writing the product type of a target product. "Issuance year and month" is an element for writing the issuance year and month or a service manual. "Issuance year" is an element for writing the issue year for a service manual. "Model name" is an element for writing the model name of a target product. "General view" is an element for describing the general view of a target product. It should be noted that the individual elements "maker name", "product type", "issuance year and month", "issuance year" and "model name" are those that appear only once, and element "general view" is an element that appears 0 times or more.

Further, "arbitrary element" is an element for defining and writing an arbitrary element. "Specifications" is an element related to the specification portion of a target product. It should be noted that the element "arbitrary element" described above appears 0 times or more, and the element "specifications" appears only once. Furthermore, the elements "arbitrary element" and "specifications" can be arbitrarily selected.

In addition, the elements "title level 1", "title level 2", "title level 3" and "table" are present below the element "main edition". "Title level 1" is an element for the title level 1 (chapter) portion. "Title level 2" is an element for the title level 2 (section) portion. "Title level 3" is an element for the title level 3 (paragraph) portion. "Table" is an element for writing a table to be inserted into main text. It should be noted that the element "title level 1" described above is the one that appears once or more, while the elements "title level 2", "title level 3" and "table" are those that appear only once, and all the elements below "main edition" can be arbitrarily selected.

"Title level 1", present in the layer below "main edition", is an element for the title level 1 (chapter) portion. Further, elements "title name", "arbitrary element" and "title level 2" are present below "title level 1". It should be noted that the element "title name" is the one that appears only once, and that the elements "arbitrary element" and "title level 2" are those that appears 0 times or more.

"Title name", present in the layer below "title level 1", is an element for writing the title name of the title level 1 (chapter). Furthermore, "arbitrary element", present in the layer below "title level 1", is an element for defining and writing an arbitrary element. In addition, "title level 2", present in the layer below "title level 1", is an element for the title level 2 (section) portion, and with "title level 2", the title level 2 (section), included in the title level 1 (chapter), is identified.

Moreover, "title level 2", present in the layer below "main edition", is an element in the title level 2 (section) portion. Further, elements "title name", "arbitrary element" and "title level 3" are present below "title level 2". It should be noted that element "title name" is one that appears only once, and elements "arbitrary element" and "title level 3" are those that appear 0 times or more.

"Title name", present in the layer below "title level 2", is an element for writing the title name of the title level 2 (section). "Arbitrary element", present in the layer below "title level 2", is an element for defining and writing an arbitrary element. Further, "title level 3", present in the layer below "title level 2", is an element for the title level 3 (paragraph) portion, and with this "title level 3", the title level 3 (paragraph) included in the title level 2 (section) is identified.

Furthermore, "title level 3", present in the layer below "main edition", is an element for the title level 3 (paragraph) portion. Also, elements "title name", "arbitrary element" and "title level 4" are present below "title level 3". It should be noted that element "title name" appears only once, and elements "arbitrary element" and "title level 4" appear 0 times or more.

"Title name", present in the layer below "title level 3", is an element for writing the title name of the title level 3 (paragraph). "Arbitrary element", present in the layer below "title level 3", is an element for defining and writing an arbitrary element. "Title level 4", present in the layer below "title level 3", is an element for the title level 4 portion, and with this "title level 4", the title level 4 included in the title level 3 (paragraph) is identified.

As well as for the element structure of "title level 3", elements "title name", "arbitrary element" and "title level 5" are present below "title level 4". Further, elements "title name" and "arbitrary element" are present in the layer below an element (element "title level 5" in this case) that is present in the lowermost layer of the hierarchical structure, and since there is no lower element, an element for another title level portion is not present.

It should be noted that the form (the sorting of chapters and the setting of the number of layers) of the hierarchical structure formed of chapters, sections and paragraphs in the above described main edition is arbitrarily determined by a service manual creator, and depends on the contents of the main edition portion.

Moreover, elements "title name", "arbitrary element" and "table remarks" are present below "table", which is located in the layer below "main edition". It should be noted that elements "title name" and "table remarks", described above, appear 0 times or only once, and element "arbitrary element" appears only once. "Title name", present in the layer below "table", is an element for writing the title name of a table. "Arbitrary element", present in the layer below "table", is an element for defining and writing an arbitrary element. "Table remarks", present in the layer below "table", is an element for writing remarks for a table.

On the other hand, element "back cover" is present in the layer below element "appendix". This element "back cover" is an element for writing additional information to be carried on a back cover, and appears only once.

As described above, since a structure definition (DTD) is designated to obtain uniform and functional main text, which is one of the contents that constitute an XML service manual, structured main text (main text XML data) can be generated based on this structural definition.

### <SVG Drawing Structural Definition>

An SVG drawing structure definition in Fig. 4 will now be described. Fig. 4 is a diagram showing an example SVG drawing structure definition that is employed for the mode of the present invention. It should be noted that in Fig. 4 the DTD for an SVG drawing is typically shown by using a tree structure.

"SVG drawing" in Fig. 4 corresponds to the element (see Fig. 2) present below "XML service manual", described above, and is a root element that includes SVG data related to drawings, such as wiring diagrams, board diagrams, mechanism diagrams and block diagrams, for a predetermined product in an XML service manual that is formed of structured sentences.

Further, "script element" including CDATA, "script element" including attribute xlink:href = "external script file name", "drawing custom element", "square element", "element to be referred to", "group element" including attribute id = "safety designated", "group element" including attribute id = "root" and "group element" including attribute id = "additional comment" are present below root element "SVG drawing". It should be noted that "script element" including CDATA, "script element" including attribute xlink:href = "external script file name", "element to be referred to", "group element" including id = "safety designated" and "group element" including attribute id = "additional comment" are those that appear 0 times or only once below "SVG drawing". Elements "drawing custom element", "square element" and "group element" including attribute id = "root" are those that appear only once below "SVG drawing".

An explanation will be given sequentially for the individual elements "script element" including CDATA (an arbitrary character string), "script element" including attribute xlink:href = "external script file name", "drawing custom element", "square element", "element to be referred to", "group element" including id = "safety designated", "group element" including attribute id = "root" and "group element" including attribute id = "additional comment".

"Script element" including CDATA is a script element for an SVG drawing, and element "CDATA", for writing a specific script in an SVG drawing, is present below this "script element". It should be noted that element "CDATA" appears only once below "script element". The minimum required script, for example, can be embedded in element "CDATA". Further, for example, as the attribute for "CDATA", the initial display state of the SVG drawing can be set to "aliasing = none" (defaultAntialias = 0).

Further, "script element", including attribute xlink:href = "external script file name", is also a script element relative to an SVG drawing, and an attribute related to a link to an external script file, for example, is designated. Basically, a script is not embedded in SVG drawing data and a method for referring to an external script file is employed, so that the multiplicity of use of SVG drawing data is increased. Furthermore, by changing or correcting an external script file, the script version can be easily upgraded from then on.

Also, "drawing custom element" is an element for writing custom information related to an SVG drawing. Since this element is not defined in accordance with the SVG standards, this element must be arbitrarily defined. When a custom definition is employed, a name space should be designated in advance as the attribute for an "svg" element (a root element "SVG drawing").

In addition, elements "maker name", "manual number", "manual title", "drawing number", "drawing title", "block identification symbol", "drawing creation date", "drawing version number" and "external script allowance flag" are present below "drawing custom element". It should be noted that all these elements below "drawing custom element" are those that appear only once.

The individual elements below "drawing custom element" will now be described. "Maker name" is an element for writing a drawing creation maker name. "Manual number" is an element for writing the number of a target service manual for a drawing. "Manual title" is an element for writing the title name of a target service manual for a drawing. Further, "drawing number" is an element for writing the management number of a drawing. "Drawing title" is an element for writing the title name of a drawing. "Block identification symbol" is an element for writing a symbol with which a drawing can be uniquely identified. Furthermore, "drawing creation date" is an element for writing a year, a month and a day for the creation of a drawing. "Drawing version number" is an element for writing the version number of a drawing. Also, "external script allowance flag" is an element for designating whether to allow/not allow an external script operation relative to a drawing.

Further, "square element" is an "rect" element defined by the SVG standards. This "square element" designates the range for one drawing that includes a plurality of graphics primitives, and is employed to cover a drawing background with a large square, so that the background is not discontinued by the shifting of a drawing. It should be noted that to uniquely identify "square element, for example, the "id" attribute of "square element" is regarded as "background" (id = "background").

Furthermore, "element to be referred to" is a "def" element that is defined using the SVG standards. This "element to be referred to" is employed to define in advance and to write a pattern and a character employed in common in a drawing. Further, "arbitrary SVG defined element" that appears 0 times or more is present in the layer below "element to be referred to". For "arbitrary SVG defined element", each graphics primitive or character element to be referred to is described by using various elements defined using the SVG standards.

Further, "group element" including id = "safety designated" is a "g" element that is defined using the SVG standards, and is employed for grouping graphics primitives and character elements that are used to display safety designated parts to be written in a lower layer. It should be noted that to uniquely identify this "group element", for example, the "id" attribute is regarded as "safety designated" (id = "safety designated"). In addition, since this "group element" is written before the following graphics primitives and character elements, "group element" can be displayed in the lowermost layer (the lowermost layer shown at the rear on the display screen) when a drawing is displayed on the screen.

Moreover, "arbitrary SVG defined element" that appears 0 times or more is present in the layer below "group element" including id = "safety designated". For "arbitrary SVG defined element", for example, a shaded display graphics primitive for displaying a safety designated part (highlighting) is written by using various elements that are defined by the SVG standards.

In addition, "group element" including id = "root" is a "g" element defined using the SVG standards, and is employed to group all the graphics primitives and character elements that are to be written in lower layers. It should be noted that to uniquely identify this "group element", for example, the "id" attribute of this "group element" is regarded as "root" (id = "root").

Also, "group element" including id = "layer number" is present in the layer below "group element" including id = "root". For "group element" including id = "layer number", graphics primitives written in the lower layer are grouped in one layer by using the "g" element that is defined using the SVG standards. Further, for a description of a plurality of layer groups, an element of a drawing to be displayed in a lower layer (lower layer located at the rear on the display screen) on a screen should be written first. It should be noted that to uniquely identify this "group element", the "id" attribute of "group" element is regarded as "layer number" (id = "layer number") and "layer name" is written as a custom attribute.

Below "group element" including id = "layer number", "group element" that appears once or more is present in order to group elements for parts, or for signal lines. For this "group element", by using the "g" element defined using the SVG standards, graphics primitives or character elements written in lower layers are grouped for parts or for signal lines. It should be noted that to uniquely identify this "group element", for example, "part symbol number" or "signal line identification number" is written as the custom attribute for "group element". Further, when the drawing group obtained by "group element" need not be uniquely identified, an empty custom attribute is set.

Also, "arbitrary SVG defined element" that appears 0 times or more and "group element" that appears 0 times or more are present below "group element" that groups elements for parts, or for signal lines. For this "arbitrary SVG defined element", for example, a graphics primitive or a character element for a part or a signal line is written by using various elements defined using the SVG standards. Further, graphics primitives or character elements that have the same style (e.g., a display style of a color or a painting pattern) for the same parts or the same signal lines are grouped by using the "g" element that is defined using the SVG standards.

In addition, "group element" including attribute id = "additional comment" is a "g" element defined using the SVG standards, and is employed to group graphics primitives or character elements that are added separate from the original wiring diagrams, board diagrams, mechanism diagrams and block diagrams. It should be noted that to uniquely identify this "group element", the "id" attribute of this "group element" is regarded as an "additional comment" (id = "additional comment").

"Group element" and "arbitrary SVG defined element", which can be selected, are present below "group element" including attribute id = "additional comment". For this "group element", additional graphics primitives or character elements are grouped by using the "g" element that is defined using the SVG standards. It should be noted that, when an external script is run for the graphics primitive or the character element, a correlation, such as onclick = "external script function", is written between an arbitrary event and the external script. Further, for "arbitrary SVG defined element", an additional graphics primitive or character element is written by using various elements defined using the SVG standards.

As described above, since a structure definition (DTD) is designated in order to obtain a uniform and functional drawing, which is one of the contents constituting an XML service manual, a structured drawing (SVG drawing data) can be generated based on this structure definition.

### <Parts Table Structure Definition>

A parts table structure definition shown in Fig. 5 will now be explained. Fig. 5 is a diagram showing an example parts table structure definition used for the mode of the present invention. It should be noted that, in Fig. 5, a DTD for a parts table is typically shown by using a tree structure.

"Parts table" shown in Fig. 5 corresponds to the element (see Fig. 2) present in the layer below "XML service manual", as described above, and is a root element, for an XML service manual that is formed of structured sentences, wherein information is written for individual parts that constitute a predetermined product. Further, element "header" that appears only once and element "row" that appears once or more are located below the root element "parts table".

"Header", which is present below "parts table", is an element for writing a target model for a parts table, and element "model name", which appears once or more, is located below "header". This "model name" is an element for identifying a target model (target product) for each part when parts tables for a plurality of target products are collected into a single parts table. It should be noted that to uniquely identify each model, for example, "model identification symbol" is entered to the "id" attribute of "model name".

On the other hand, "row", present below "parts table", is an element for collectively writing elements located in the lower layer. It should be noted that a "sort character string" attribute, used to designate the order in which to sort individual parts, a "change identification symbol" attribute, used to identify a change in the parts table, a "model identification symbol" attribute, used to identify parts when a plurality of models exist, a "manual number" attribute, for a part in a target service manual, a "part symbol number" attribute and a "block identification symbol" attribute for an SVG drawing, in which a target part is included, are entered as attributes of "row".

Further, elements "designation of safe part", "part symbol number", "designation of replacement", "part number", "part name", "remarks", "district", "number of parts in use", "SVG file name 1", "SVG file name 2", "IC function table file name", "block number", "reservation 1" and "reservation 2" are present below "row". It should be noted that all of the above elements located in the layer that is lower than "row" are those that appear only once. The individual elements located below "row" will be sequentially explained.

"Designation of safe part" is an element for writing the presence/absence of the designation safety for a part. Further, "part symbol number" is an element for writing a symbol number for a part. "Designation of replacement" is an element for writing the presence/absence of a designation for a replacement of a part. Furthermore, "part number" is an element for writing the number of a part. "Part name" is an element to write the name of a part. In addition, "remarks" is an element for writing remarks relative to a part. "District" is an element for writing a sales district, etc., for a target model for which parts are employed. Moreover, "number of parts in use" is an element for writing the number of parts in use. "SVG file name 1" is an element for writing the file name of an SVG drawing (e.g., a wiring diagram) in which a part is included. "SVG file name 2" is an element for writing the file name of an SVG drawing (e.g., a board diagram or a mechanism diagram) in which a part is included. Also, "IC function table file name" is an element for writing the file name of an IC function table relative to a part. And "block number" is an element for writing the block number of a board on which a part is included. "Reservation 1" and "reservation 2" are elements to be used in the future, and as an example, a "designation of reference destination" attribute is provided while taking cooperation with a web site into account.

As described above, since a structure definition (DTD) is designated to provide a uniform and functional parts table that is one of contents constituting an XML service manual, a structured parts table (parts table XML data) can be generated based on this structure definition.

### <IC Function Table Structure Definition>

An IC function table structure definition shown in Fig. 6 will now be explained. Fig. 6 is a diagram showing an example IC function table structure definition employed for the mode of the present invention. It should be noted that, in Fig. 6, the DTD for the IC function table is typically shown by using a tree structure.

"IC function table" shown in Fig. 6 corresponds to the element (see Fig. 2) present in the layer that is lower than "XML service manual", described above, and is a root element, for an XML service manual that is formed of structured sentences, of the function table of ICs arranged in a target product. Further, elements "part number", "block diagram file name", "function name" and "function table" are present in the layer below the root element "IC function table". It should be noted that all of the above elements located below "IC function table" are those that appear only once.

"Part number", which is present in the layer below "IC function table", is an element for writing the part number of an IC. Further, "block diagram file name", which is present below "IC function table", is an element for writing the function block diagram file name of an IC. In addition, "function table", present below "IC function table", is an element for collectively writing the IC functions.

Moreover, element "row", which appears once or more, is present below "function table" described above. "Row", located below "function table", is an element for collectively writing the functions of the individual IC terminals arranged in lower layers. It should be noted that to designate the order in which to sort the functions of the IC terminals, for example, "row number" is written as the "id" attribute of "function table".

Furthermore, elements "terminal number", "label name", "input/output" and "function details" are present below "row". It should be noted that all of the above elements present below "row" are those that appear only once. The individual elements located below "row" will now be sequentially described.

"Terminal number" is an element for writing an IC terminal number. "Label name" is an element for writing an IC terminal name or a label name. Further, "input/output" is an element for writing the input/output direction of an IC terminal. Also, "function details" is an element for writing the details of the function of an IC terminal.

As described above, since a structure definition (DTD) is designated in order to provide a uniform and functional IC function table that is one of the contents constituting an XML service manual, a structured IC function table (IC function table XML data) can be generated based on this structure definition.

### <Voltage Value Table Structure Definition>

A voltage value table structure definition shown in Fig. 7 will now be explained. Fig. 7 is a diagram showing an example voltage value table structure definition used for the mode of the present invention. It should be noted that, in Fig. 7, the DTD for the voltage value table is typically shown by using a tree structure.

"Voltage value table" shown in Fig. 7 corresponds to the element (see Fig. 2) present below "XML service manual", which is described above, and is a root element of a voltage value table for an XML service manual that is formed of structured sentences. Furthermore, element "header", which appears only once, and element "row", which appears once or more, are present below the root element "voltage value table".

"Header", located below "voltage value table", is an element for writing a target model for a voltage value table, and element "model name", which appears once or more, is present in the layer below "header". This "model name" is an element used to identify a target model (target product) with a part, when voltage tables for a plurality of target products are to be collected into one voltage value table. It should be noted that to uniquely identify individual models, for example, "model identification symbol" is written as the "id" attribute of "model name".

On the other hand, "row", present below "voltage value table", is an element for collectively writing the elements arranged in lower layers. Further, a "row number" attribute, for designating the order in which to sort voltage values, a "model identification symbol" attribute, for identifying parts for a plurality of models that are available, a "manual number" attribute, for a service manual, that is a target for a voltage value, a "part symbol number" attribute, a "block identification symbol" attribute, for an SVG drawing where a target part for a voltage value is included, and a "terminal number" attribute, for designating a target part for a voltage value when the target part is an IC or a transistor, are written as attributes for "row".

Element "voltage value", which appears once or more, is also present below "row", described above. This "voltage value" is an element for writing an appropriate voltage value at a specific location in a target product. It should be noted that a "voltage measurement mode" attribute and a "reference waveform diagram file name" attribute, when there is a waveform diagram to be referred to in addition to a voltage value, are written as example attributes of element "voltage value".

As described above, since a structure definition (DTD) is designated in order to provide a uniform and functional voltage value table that is one of the contents constituting an XML service manual, a structured voltage value table (voltage value table XML data) can be generated based on this structure definition.

### <My-Notes Structure Definition>

A my-notes structure definition shown in Fig. 8 will now be described. Fig. 8 is a diagram showing an example my-notes structure definition used for the mode of the present invention. It should be noted that, in Fig. 8, a DTD for my-notes is typically shown by using a tree structure.

"My notes", shown in Fig. 8, is a root element, for an XML service manual that is formed of structured sentences, of comment information that is dynamically generated relative to an SVG drawing. It should be noted that element "comment information", which appears once or more, is located below root element "my notes".

"Comment information" is an element for collectively writing the elements arranged in lower layers. It should be noted, for example, that a "manual number" attribute for a service manual, where an SVG drawing for a comment is included, a "title name" attribute for a comment, a "target drawing number" attribute, for designating a target SVG drawing, a "drawing display form" attribute, a "simultaneously displayed drawing number" attribute, for designating a drawing that is displayed together with a target SVG drawing, and a "creation year, month and day" attribute for a comment are written as the attributes of "comment information".

Furthermore, elements "model name", "comment", "registered member name", "attached file" and "reference web site" are present below this "comment information". It should be noted that all of the above elements located below "comment information" are those that appear only once. The individual elements present below "comment information" will now be described sequentially.

"Model name" is an element for writing the name of a target model for a comment. It should be noted that the details for a comment (e.g., information about a target block, parts, etc., for a comment) are written, for example, to a "block number" attribute, a "block identification symbol" attribute and a "part symbol number" attribute, which are attributes of element "model name". Further, "comment" is an element for writing a comment. A comment type is written, for example, to a "comment type identification symbol" attribute and a "comment type" attribute that are elements of "comment". "Registered member name" is an element for writing the name of a registered member who enters a comment. A comment registered member email address is written, for example, to an "email address" attribute, which is an attribute of element "registered member". Furthermore, "attached file" is an element for writing the file name (including a path) of an attached file that is attached in relation with the registration of a comment. In addition, "reference web site" is an element for writing the URL of a web site to be referred to.

As described above, since a structure definition (DTD) is designated to provide uniform and functional arbitrary information that a user inserts into an XML service manual, structured arbitrary information (my-notes XML data) can be generated based on this structure definition.

### <My-Drawings Structure Definition>

A my-drawings structure definition shown in Fig. 9 will now be described. Fig. 9 is a diagram showing an example my-drawings structure definition used for the mode of the present invention. It should be noted that, in Fig. 9, a DTD for my drawings is typically shown by using a tree structure.

"My drawings" shown in Fig. 9 is a root element, for an XML service manual that is formed of structured sentences, of color change information that is dynamically generated relative to an arbitrary graphics primitive in an SVG drawing. Further, element "color information" that appears once or more is present below the root element "my drawings".

"Color information" is an element for writing the color of a graphics primitive (SVG graphics primitive) in an SVG drawing. It should be noted, for example, that a "manual number" attribute, for a service manual that includes a target SVG drawing for color changes, a "target drawing number" attribute, for designating a target SVG drawing for color changes, and a "part symbol number, signal line identification number" attribute, for designating a part symbol or a signal line for a target SVG graphics primitive for a color change, are written as attributes of "color information".

As described above, since a structure definition (DTD) is designated in order to provide uniform and functional information related to an arbitrary setup that a user performs for a graphics primitive in an XML service manual, structured arbitrary setup information (my-drawings XML data) can be generated based on this structure definition.

It should be noted that the present invention includes programs that permit a computer to perform the function (function for generating an XML service manual) of the XML service manual generation control unit 1000 described above and the function (function for generating additional data) of the XML service manual display device 1500 described above. These programs may be fetched into a computer by being read from a recording medium, or may be fetched into a computer by being transmitted across a communication network.

Furthermore, the present invention has focused on the fact that the structure definitions are designated for all the contents of a service manual, and all the contents are structured based on the structure definitions for generating a structure electronic service manual (XML service manual. On the other hand, the basic application of the present invention has focused on visual functions such that, when the thus generated electronic service manual (e.g., an XML service manual generated by the XML service manual generation control unit 1000 in Fig. 1) is actually in use, the electronic service manual is visually provided, for example, by being displayed on the display unit of a computer. Therefore, the present invention and the invention related to the basic application are closely related. An explanation will now be given for the contents of the invention related to the basic application of the present invention (a mode in which an electronic service manual generated by the present invention is actually employed).

One embodiment of the present invention will now be described while referring to the drawings. Fig. 12 is a diagram showing a hardware configuration used for the embodiment of the present invention. Interconnected by a bus 8, in the state shown in Fig. 12, are a CPU (Central Processing Unit) 1, for performing a computation process and a control process; a memory 2, for temporarily storing data; a display device 3, such as a CRT (Cathode Ray Tube) display device or a liquid crystal display device for visually presenting information; operation input means 4, such as a keyboard or a mouse for entering an operation or information; a hard disk 5, for storing various digital data; a CD-ROM drive 6, for reading data recorded on a CD-ROM (Compact Disk Read Only Memory) 61; and a network card drive 7, for communicating through a network 71 with a server 72 or another communication device connected to the network.

Stored on the hard disk 5 are an OS (Operating System) 51, which is the basic software for managing software and hardware and for enabling their use by an application; an XML parser 52, for analyzing text written in the XML (extensible Markup Language) data; a browser 53, for analyzing and displaying XML data, analyzed by the XML parser 52, or HTML (Hyper Text Markup Language) data; and an SVG viewer 54, for displaying vector graphics data such as SVG (Scalable Vector Graphics) data or SVGZ (compressed SVG) data. It should be noted that the SVG viewer 54 has a function for enabling the enlarged display and the reduced display of SVG data and the shifting and the display of SVG data in a drawing.

These applications are executed by the CPU 1. Further, in the state specifically shown in Fig. 12, the SVG viewer 54 is plugged into the browser 53, and the XML parser 52 is provided independently of the browser 53. However, an environment wherein, for example, the XML parser 52 is incorporated in the browser 53 may be employed. That is, in this case, any environment is available so long as XML data or SVG data can be appropriately displayed by the browser 53.

On the CD-ROM 61 are stored a control program 62, which includes script languages such as XSL (extensible Stylesheet Language) data used for determining the display style of the XML data, HTML data or JavaScript (trademark) data, and contents data 63, which include raster image data, such as XML data or PNG (Potable Network Graphics) data, and vector graphics data, such as SVG data or SVGZ data. When these data stored on the CD-ROM 61 are read by using the CD-ROM drive 6, and are processed and displayed by a script engine mounted in the XML parser 52 or the browser 53, contents having a desired form can be displayed on the browser. It should be noted that the SVG data are vector graphics data, the file size of which is smaller than that of PDF data, and is written on the XML base.

Further, in addition to the CD-ROM drive 6 and the CD-ROM 61, a set consisting of a DVD (Digital Versatile Disk) reading drive and a DVD, or various other recording medium readers and recording media can be employed. Further, by using the network card drive 7, a control program 62 and contents data 63 stored in a predetermined communication device (e.g., the server 72) connected to the network 71 can be obtained, and a desired display can be presented on the browser 53. Also, a required control program 62 and required contents data 63 can be stored in advance on the hard disk 5.

The configuration wherein the CPU 1, the memory 2, the display device 3, the operation input means 4, the hard disk 5, the CD-ROM drive 6 and the network card drive 7 are interconnected by the bus 8 can also be provided, for example, by a common PC. In the following explanation, an example is employed wherein a common PC is employed to perform the processing related to a service manual and to provide a display for the service manual.

An explanation will now be given for the processing performed to display contents data 63 on the display device 3. For this, a service manual related to one specific product will be described. Basically, contents data 63 are prepared for each product, so that for one product one service manual is available. That is, for example, a service manual is individually prepared for each model of a DVD audio player. To present this service manual, XML data, included with the contents data 63, are employed as a database.

To display the contents of XML data on the display device 3, first, the XML parser 52 analyzes the hierarchical structure of and the format used for the XML data stored on the CD-ROM 61, or in the server 72 or another data storage means. The XML data analyzed by the XML parser 52 are then transmitted to the browser 53 or the SVG viewer 54, where they are processed by referring to predetermined XSL data. The resultant XML data are then displayed.

A specific explanation will now be given for an index page, a circuit diagram page, a board diagram page and a parts table page that are generated, based on the XML data included in the contents data 63, and displayed on the display device 3. The index page and the parts table page are set up so that they are displayed by the browser 53, as desired, in accordance with a data set consisting of XML data for each corresponding page and predesignated XSL data. The circuit diagram page and the board diagram page are set so that they can be displayed by the browser 53, as desired, in accordance with SVG data or SVGZ data for each corresponding page.

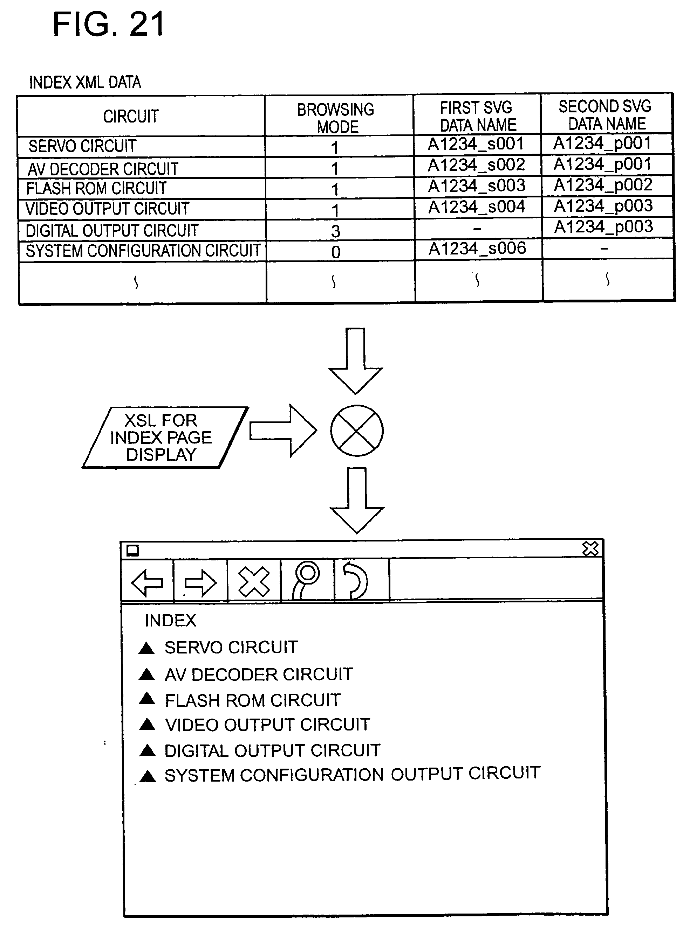

For example, in Fig. 21 are shown example XML data (index XML data) for a corresponding index page and the state wherein the index XML data are processed and displayed by the browser 53. The index XML data represent a correlation of all the circuits mounted in the pertinent model, the browsing modes (which will be described later) for displaying SVG data related to the individual circuits, the circuit diagram data names (first SVG data names) for displaying detailed circuit diagrams for these circuits, and the board diagram data names (second SVG data names) for displaying display board diagrams for the individual circuits that are mounted.

To display index XML data on the browser 53, XSL for an index page display is used to process the index XML data. For example, an index page for displaying the list of circuits is generated based on the index XML data. The categories (hereinafter also referred to as drawing categories) in the circuit list can be selected by using a mouse, for example, and as will be described later, by selecting a drawing category, a circuit diagram or a board diagram that corresponds to the selected drawing category (specifically, a circuit diagram (first SVG data name) or a board diagram (second SVG data name) correlated in the index XML data) is selectively displayed in a predetermined frame.

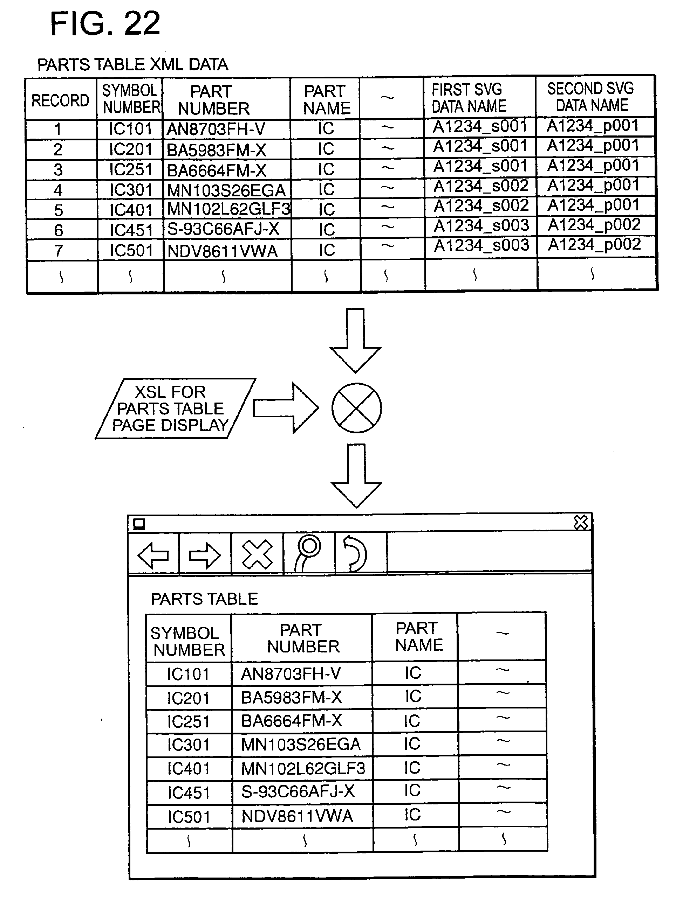

Shown in Fig. 22 are example XML data (parts table XML data) corresponding to a parts table page and the state wherein the parts table XML data are processed and displayed on the browser 53. For the parts table XML data, a record is provided for each of the parts, such as an IC, a resistor and a diode, that constitute a circuit. This record includes not only various information such as a symbol number (identification number), a part number and a part name, but also the names of circuit diagram data and board diagram data where the pertinent part exists. A symbol number is provided for each part so as to correlate each part with a specific symbol number without overlapping, i.e., one record is correlated with one symbol number. Furthermore, the parts table XML data satisfactorily represents all the parts of all the circuits constituting the model.

To enable the browser 53 to display the parts table XML data, XSL for a parts table page display is used to process the parts table XML data. For example, a parts table page for the display of the list of parts is generated based on the parts table XML data. The individual entries (hereinafter also referred to as part entries) in the parts table list can be selected by using a mouse, for example, and as will be described later, by selecting a part entry, a circuit diagram or a board diagram corresponding to the selected part entry (specifically, a circuit diagram (first SVG data name) or a board diagram (second SVG data name) correlated in the parts table XML data) is selectively displayed in a predetermined frame.

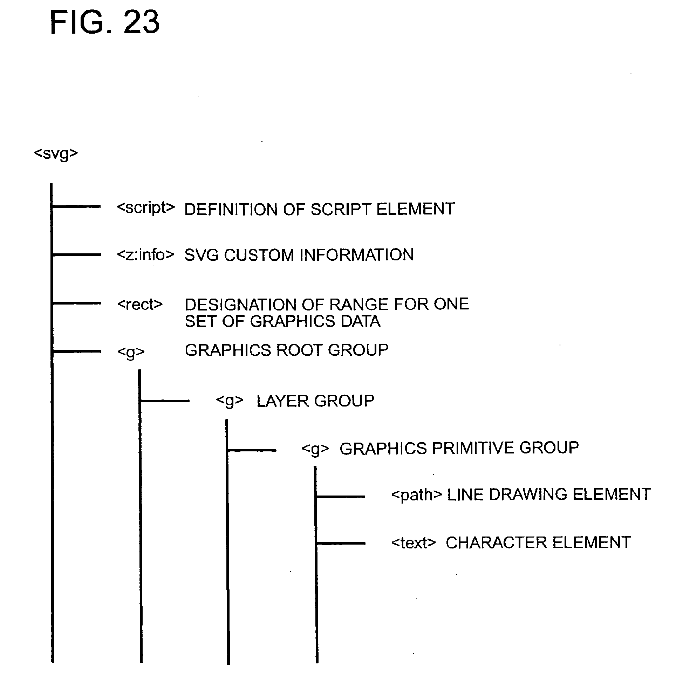

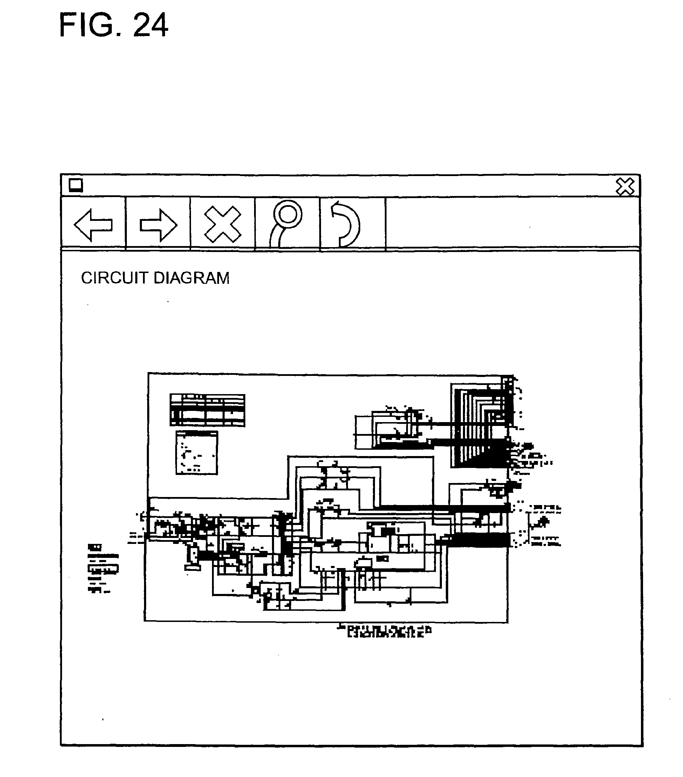

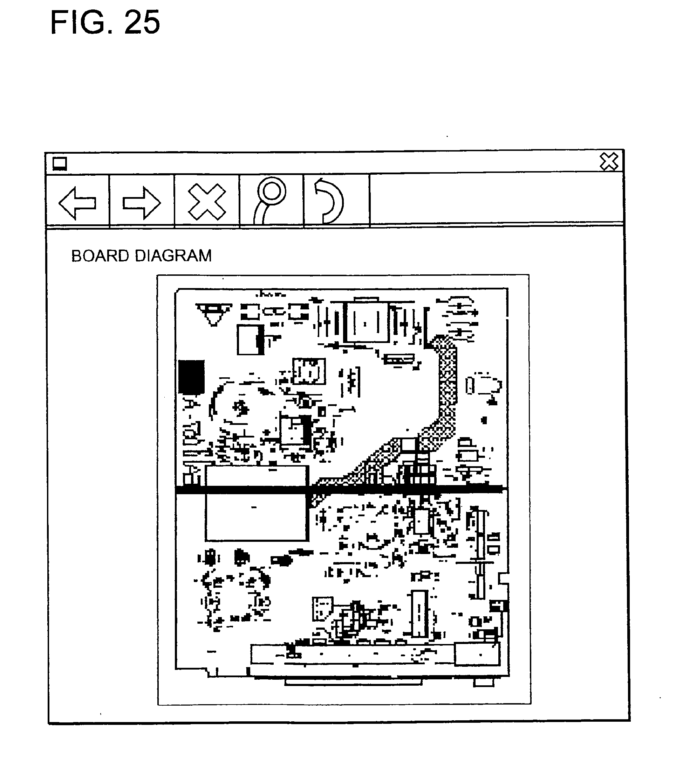

Shown in Fig. 23 are an example SVG data structure for circuit diagram data or board diagram data, and the state wherein the SVG data are processed and displayed by the browser 53. Further, shown in Figs. 24 and 25 are an example circuit diagram and an example board diagram for which display by the SVG viewer is enabled by the processing performed for the SVG data. The SVG data structure includes [<script>: definition of a script element], [<z:info>: SVG custom information such as a SVG data name], [<rect>: designation of the range for one set of graphics data] and [<g>: graphics root group to which belong various graphics primitives constituting one set of graphics data]. The graphics root group is formed of a plurality of layers [<g>: layer group], each composed of a plurality of graphics primitives [<g>: graphics primitive group]. A layer also includes lines [<path>: line drawing element] used to form the individual graphics primitives, and various text information [<text>: character element], such as the symbol numbers of parts. It should be noted that the graphics primitives correspond to the parts, such as ICs, resistors and diodes, that constitute circuits.

The SVG data names are written in the SVG custom information for the SVG data structure using the same forms as are used for SVG data names written in the index XML data and the parts table XML data, and the symbol numbers of parts are written in the character elements of the SVG data structure using the same form as are used for symbol numbers written in the parts table XML data. That is, the index XML data, the parts table XML data and the SVG data structure are closely correlated by employing the SVG data names and the symbol numbers for the parts.

In addition to the XML data, SVG data written in the XML data form also serve as a database written in the text form. Therefore, in accordance with a script language such as JavaScript (trademark), a keyword search can be easily performed for both the XML data and the SVG data by using a drawing data name or a symbol number as a keyword. It is especially very useful to employ the above described script language to perform a search of the SVG data for the graphics primitives, which are drawing data. Since the coupling process program can be located outside the contents, electronic service manual producers do not need the operation for the embedding, for example, of hyperlinks during the production of electronic service manuals, so that both the labor expended and the time required for production can be considerably reduced.

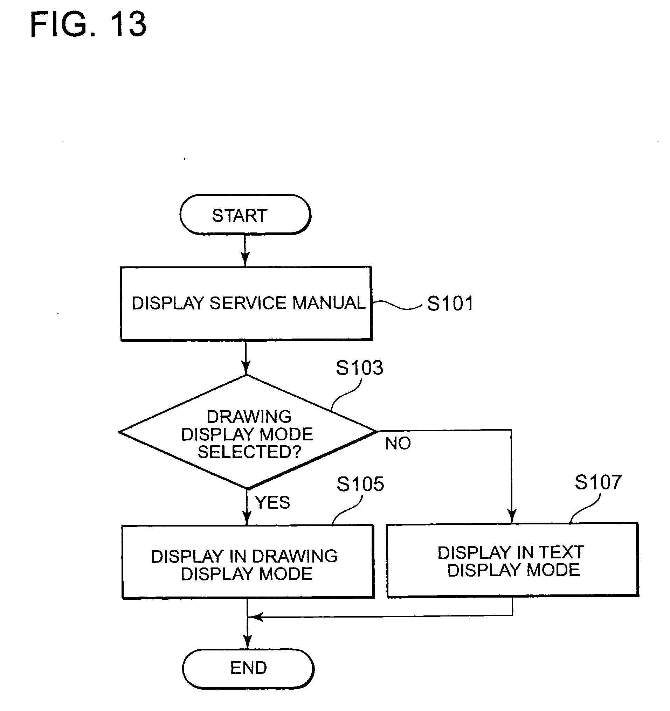

Next, an explanation will be given for the sequential processing performed to display a service manual for a specific model. Fig. 13 is a flowchart showing an overview of the service manual display processing performed according to the embodiment of the present invention. In the following explanation, an example is employed whereby the control program 62 and the contents data 63 required to display a service manual are all stored on and read from, as needed, the CD-ROM 61.

First, while monitoring the display device 3, a user manipulates the operation input means 4, such as a mouse, to select a file corresponding to a desired service manual. For example, a file corresponding to a service manual for a DVD audio/video player, model number A1234, is selected by the operation input means, such as a mouse.

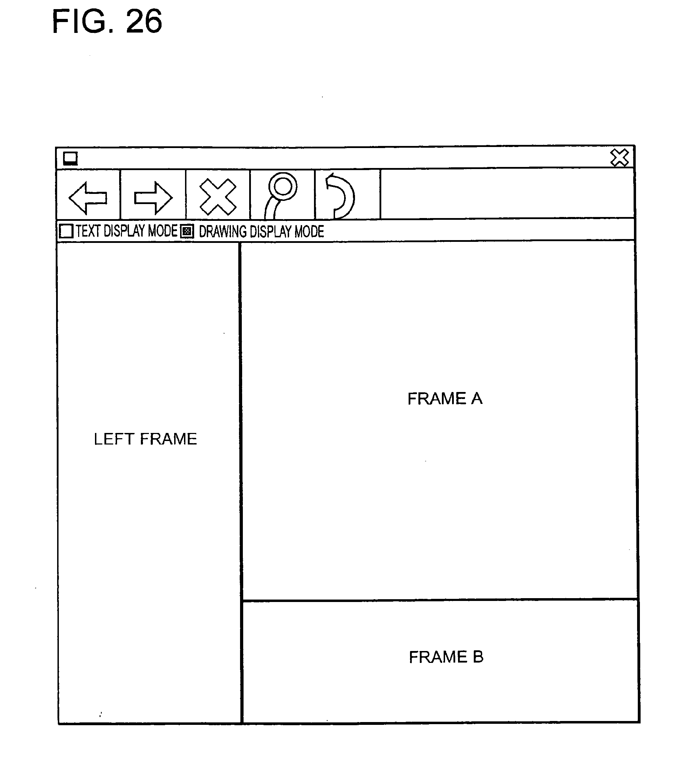

When the user selects the service manual, the PC performs a process for using the browser 53 to display the top page of that service manual on the display device 3 (step S101: Display service manual). At this time, as is shown in Fig. 26 (which will be described later), the area in the browser 53 is divided into two frames (a left frame and a right frame), for example, and the index page for the service manual is displayed in one of the frames (the left frame), while a text page in the service manual is displayed in the other frame (the right frame). It should be noted that as is shown in Fig. 21, the index page is composed of index XML data and predetermined XSL data. And the text page, as are all other pages, is composed of XML text data and predetermined XSL data, and no detailed explanation will be given for the text page.

Further, as an example, buttons for selecting a mode, either a text display mode or a drawing display mode, are displayed on the tool bar of the browser 53. Through a mode selection procedure, for which the mode selection button is used, a user can select either the text display mode or the drawing display mode.

When the drawing display mode is selected by a user ("YES" at step S103), upon the selection of a category on the index page in the left frame, a circuit diagram or a board diagram corresponding to the selected category and information concerning parts included in the circuit diagram, or the board diagram, are displayed in the right frame (step S105: Present display in drawing display mode).

On the other hand, when the text display mode has been selected by a user ("NO" at step S103), upon the selection of a category on the index page in the left frame, text pages including various captions and drawings corresponding to the selected category are displayed in the right frame (step S107: Present display in text display mode). In this embodiment, since the display is presented in the text display mode at step S101, the text display mode is continued when mode selection is not performed.

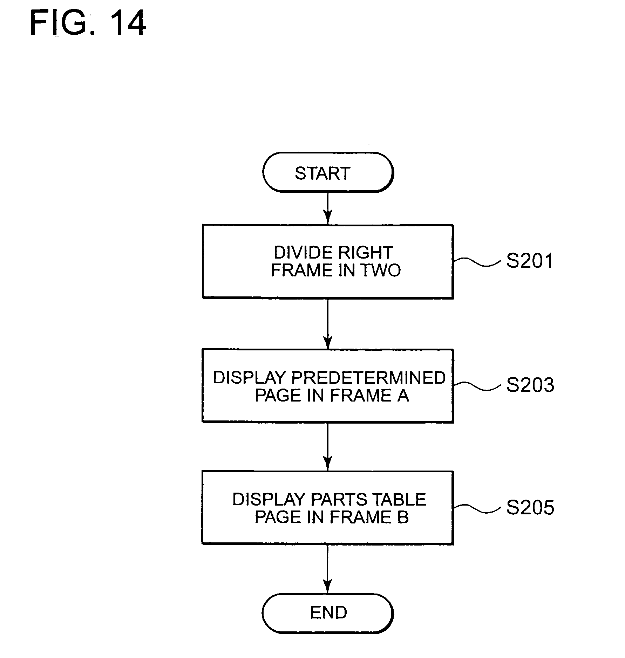

The drawing display mode will now be described while referring to the flowchart in Fig. 14. Fig. 14 is a flowchart showing an overview of the display processing performed in the drawing display mode according to the embodiment of the present invention. In the drawing display mode, as is shown in Fig. 26, subdivision of the right frame is performed to obtain two frames (frames A and B) (step S201: Divide right frame in two). The frames A and B can be arbitrarily arranged. As an example, the right frame can be divided into an upper and a lower frame, as is shown in Fig. 26. Hereafter, the upper frame in the right frame is called frame A (drawing display area), and the lower frame is called frame B (parts table page display area). A predetermined top page in the drawing display mode is displayed in frame A (step S203: Display predetermined page in frame A), and a parts table page is displayed in frame B (step S205: Display parts table page in frame B). It should be noted that, as is shown in Fig. 22, the parts table page is generated based on parts table XML data and predetermined XSL data.

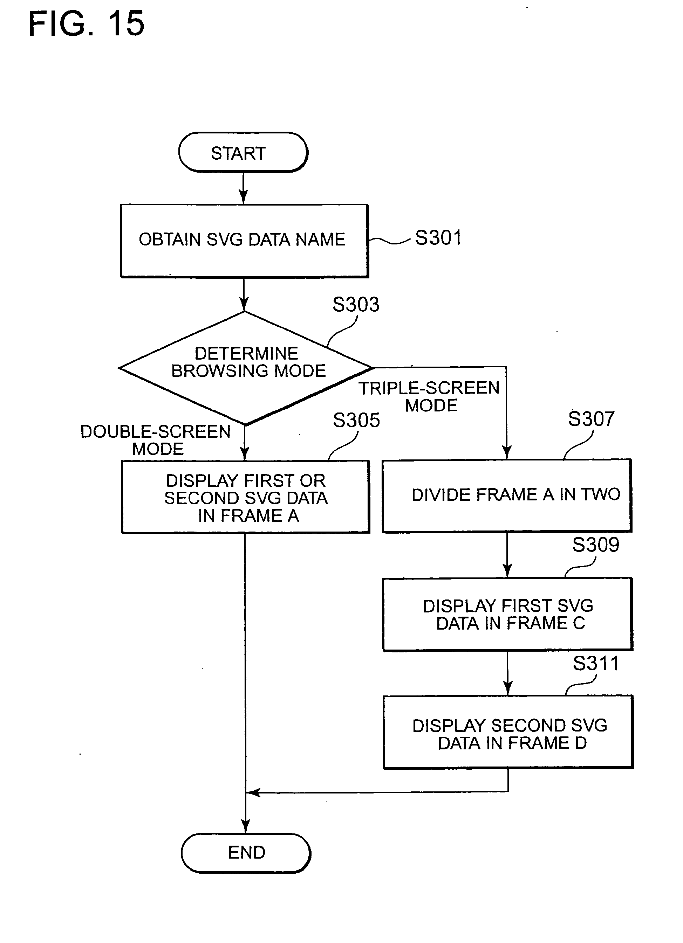

While referring to the flowchart in Fig. 15, an explanation will now be given for an overview of the display processing performed when the process at step S205 has been completed and when a user selects a drawing category on the index page displayed in the drawing display mode. Fig. 15 is a flowchart showing an overview of the display processing performed, according to the embodiment of the present invention, when a drawing category on the index page is selected in the drawing display mode.

When the drawing category displayed on the index page is selected by the user, first, the PC examines index XML data and obtains an SVG data name related to the selected drawing category (step S301: Obtain SVG data name), and determines a browsing mode for the selected drawing category (step S303: Determine browsing mode). Various methods are available for obtaining the SVG data name. As an example, the SVG data name can be easily obtained by acquiring the name of a currently displayed file.

The browsing mode designated for each drawing category on the index page is information indicating that the drawing category includes one or both of a circuit diagram and a board diagram, and whether subdivision of the frame A should be performed to obtain two more frames (frames C and D) is determined in accordance with the browsing mode. For example, when the browsing mode is "1", as is shown in index XML data in Fig. 21, two sets of SVG data (first and second SVG data) are present as associated drawings, and in order for these two sets of SVG data to be displayed, subdivision of the frame A should be performed to obtain the two frames C and D in which to display these drawings.

On the other hand, when the browsing mode is "0", only the first SVG data is present as an associated drawing, or when the browsing mode is "3", only the second SVG data is present as an associated drawing and frame subdivision is not required; either the first or the second SVG data need only be displayed in the current frame A. It may also be determined that subdivision of the frame A is not to occur when the number of associated SVG data sets is one, or that subdivision of the frame A is to be performed to obtain the two frames C and D when the number of associated SVG data sets is two, so that the decision at step S303 can be made without the browsing mode being used. In this embodiment, the frame A has been subdivided to obtain the two frames C and D. However, the frame A may, for example, be subdivided in advance to obtain the two frames C and D, so that when the number of associated SVG data sets is one, either frame C or D is not displayed, or when the number of associated SVG data sets is two, both frames C and D are displayed. That is, in accordance with the decision at step S303, whether to display one drawing in frame A or to independently display two drawings is determined.

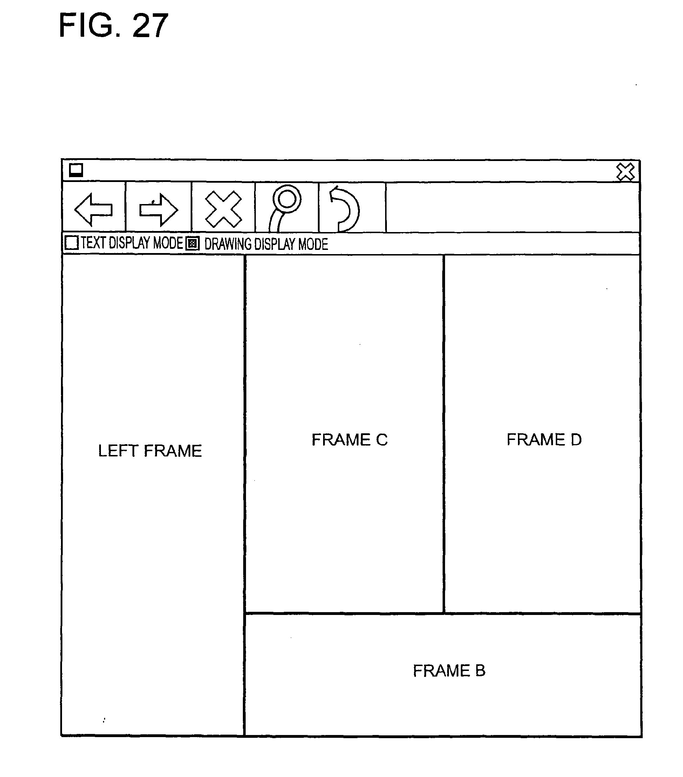

When frame A is subdivided as shown in Fig. 27, three frames, B, C and D, are obtained by dividing the right frame, and hereinafter, the state wherein the three frames B, C and D are obtained is called a triple-screen mode. Further, in comparison with the triple-screen mode, the state wherein frames A and B are obtained by dividing the right frame, but wherein frame A is not subdivided is called a double-screen mode.

As is described above, in accordance with the browsing mode decision at step S303, either the double-screen or the triple-screen mode is determined for the right frame. In the double-screen mode, the first or the second SVG data is displayed in the frame A (step S305: Display first or second SVG data in frame A). In the triple-screen mode, however, frame A is subdivided to obtain two frames (frames C and D) (step S307: Divide frame A in two). The layout of the frames C and D is arbitrary, and in this embodiment, as an example, frame A is divided into left and right frames, as is shown in Fig. 27, and the first SVG data are displayed in the left frame C (step S309: Display first SVG data in frame C), while the second SVG data are displayed in the right frame D (step S311: Display second SVG data in frame D).

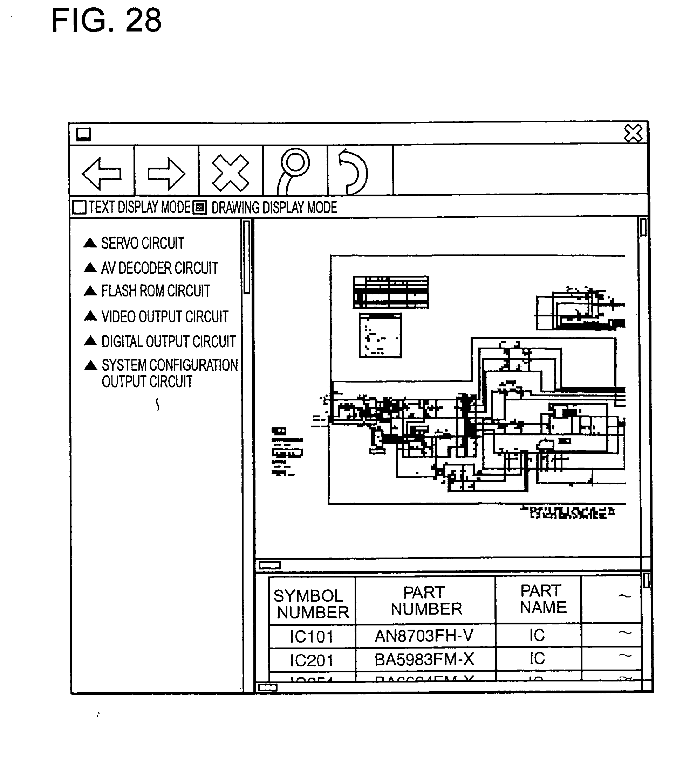

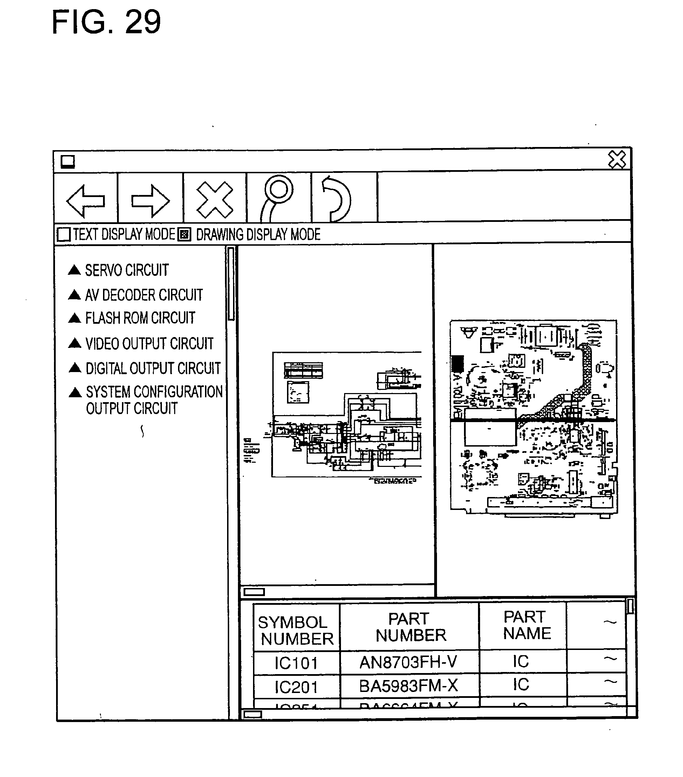

When a drawing category is selected on the index page in this manner, the browsing mode for the drawing category is identified. And when the browsing mode is the double-screen mode, as is shown in Fig. 28, the first or the second SVG data (a board diagram or a circuit diagram) and the parts table page for the selected drawing category can be displayed in the right frame. On the other hand, when the browsing mode is the triple-screen mode, as is shown in Fig. 29, the first SVG data (circuit diagram), the second SVG data (board diagram) for the selected drawing category and the parts table page can be displayed in the right frame.

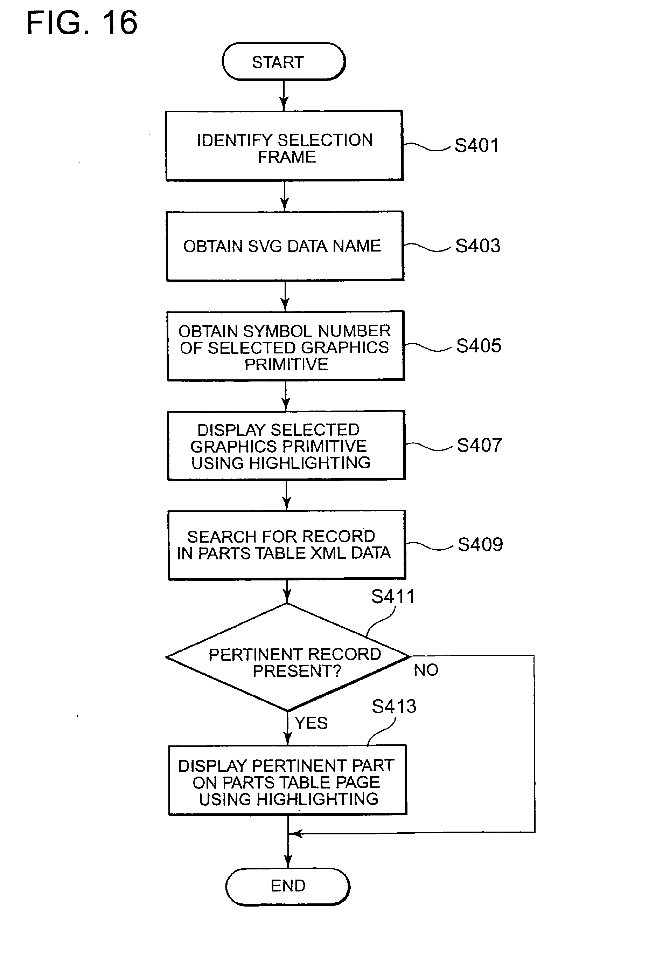

Sequentially, an explanation will be given for the processing performed when a graphics primitive is selected in a drawing displayed in the right frame in either the double-screen mode or the triple-screen mode. First, the processing performed when a graphics primitive is selected in the double-screen mode will be explained. Fig. 16 is a flowchart showing the processing performed, according to the embodiment of the present invention, when a graphics primitive is selected in a drawing displayed in frame A in the double-screen mode.

When a user selects a graphics primitive from SVG data (a circuit diagram or a board diagram) displayed in the frame A in the double-screen mode, first, the PC identifies the frame wherein the graphics primitive was selected (step S401: Identify selection frame). Since in the double-screen mode SVG data is displayed only in frame A, the selection frame is identified as frame A. Then, the name of the SVG data that include the selected graphics primitive (step S403: Obtain SVG data name) and the symbol number of the selected graphics primitive are obtained (step S405: Obtain symbol number of selected graphics primitive).

Thereinafter, in the double-screen mode, a graphics primitive that is displayed in the frame A and has the same symbol number as the selected graphics primitive is highlighted (step S407: Highlight selected graphics primitive). That is, through this processing, the graphics primitive selected by the user is highlighted on display. It should be noted that highlighting enables a user to easily identify a selected graphics primitive, by, for example, changing the color of the selected graphics primitive, or by causing the selected graphics primitive to blink.

Following this, parts table XML data are examined based on the SVG data name, which includes the selected graphics primitive and its symbol number, so as to search for a record that has both the symbol number and the SVG data (step S409: Search for record in parts table XML data).

When, as the result of the search at step S409, a pertinent record is found to be present in the parts table XML data ("YES" at step S411), the entry on the parts table page for the pertinent part is moved to a layout position where it can be easily read by the user (for example, the topmost portion of the frame B), and is displayed using highlighting (step S413: Highlight pertinent part on parts table page). It should be noted, that as well as the highlighting of a graphics primitive, the highlighting, on the parts table page, of the entry for the pertinent part enables the user to easily identify it, and that either the color of the entry for the pertinent part is changed, or the entry for the pertinent part blinks.

Although the parts table XML data should include records for all the parts included in the circuit and board diagrams, the possibility exists that the pertinent record may not be present in the parts table data, e.g., wherein a component other than a part is selected as a graphics primitive (e.g., wherein a signal line that connects parts is selected). When the pertinent part is not present in the parts table XML data, as in the above case ("NO" at step S411), highlighting of an item on the parts table page is not performed and the processing is thereafter terminated.

In this manner, a selected graphics primitive in a board or a circuit diagram can be highlighted in the frame A displayed in the double-screen mode, and the entry, on the parts table page, of a part corresponding to the selected graphics primitive can be highlighted in frame B.

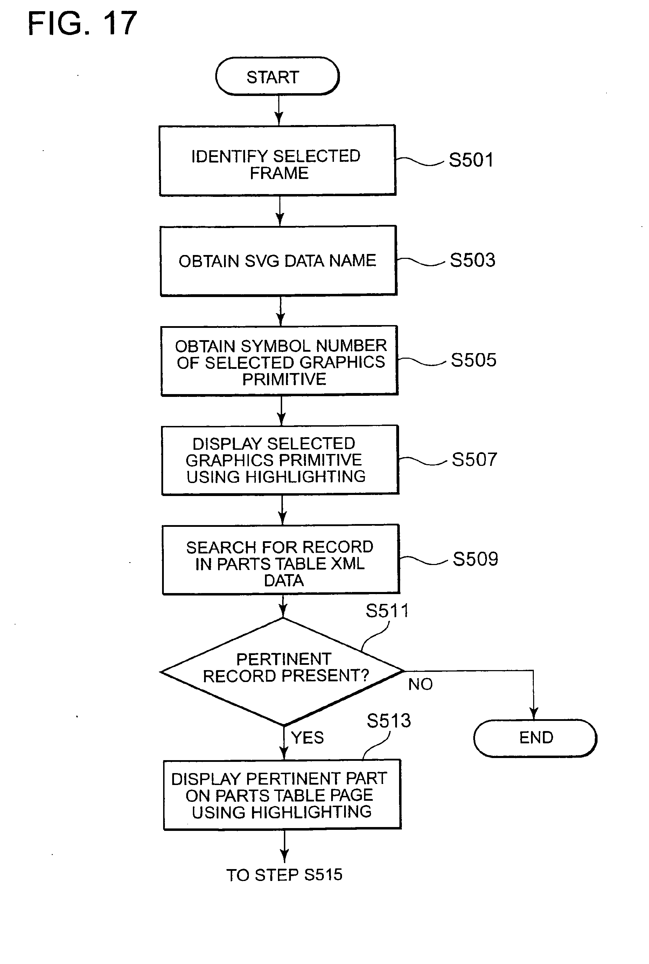

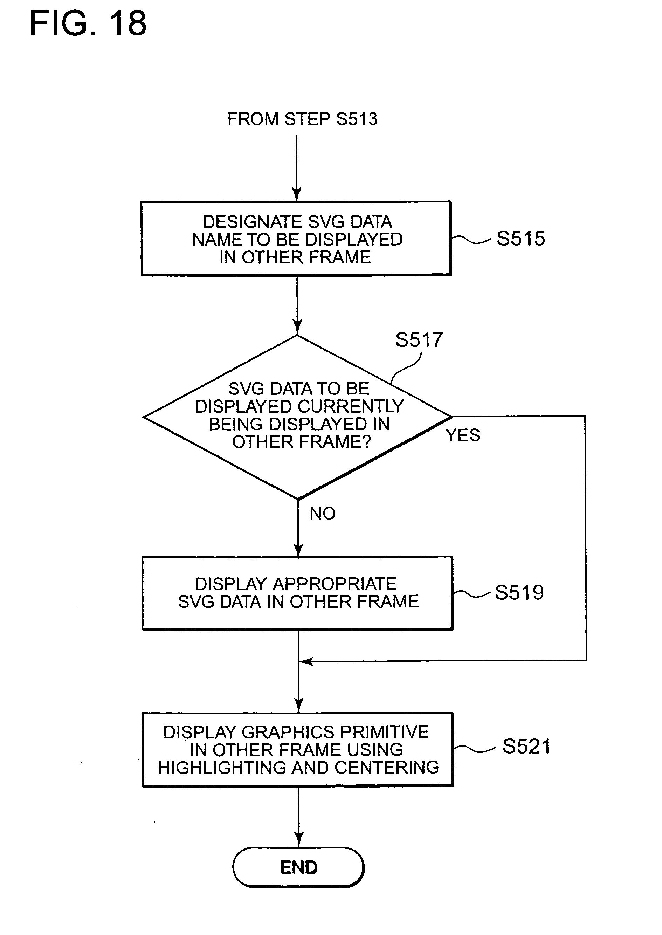

An explanation will now be given for the processing performed when a graphics primitive is selected in the triple-screen mode. Figs. 17 and 18 are the first and second pages of a flowchart showing the processing performed when a graphics primitive is selected in a drawing displayed in one of the frames C and D.

When in the triple-screen mode a user uses, for example, a mouse and selects a graphics primitive in the first SVG data (circuit diagram) displayed in the frame C or a graphics primitive in the second SVG data (board diagram) displayed in the frame D, first, the PC identifies the frame wherein the graphics primitive is selected (step S501: Identify selected frame). Since SVG data are displayed both in the frames C and D in the triple-screen mode, it is readily apparent that the selected frame is either the frame C or D.

Then, an SVG data name including the selected graphics primitive is obtained (step S503: Obtain SVG data name), as is the symbol number of the selected graphics primitive (step S505: Obtain symbol number of selected graphics primitive). In the triple-screen mode, graphics primitives are displayed in the selected frame, and a graphics primitive having the same symbol as the selected graphics primitive is displayed using highlighting (at step S507: Highlight selected graphics primitive). That is, through this process, the selected graphics primitive displayed in the frame (either the frame C or D) that includes the selected graphics primitive is highlighted.

Following this, parts table XML data are examined based on the SVG data name, which includes the selected graphics primitive, and the symbol number of the selected graphics primitive, so as to search for a record that includes both the symbol number and the SVG data name (step S509: Search for record in parts table XML data).

When, as a result of the search at step S509, the pertinent record is found to be present in the parts table XML data ("YES" at step S511), the entry for the pertinent part in the parts table page is moved to a layout position where it can be easily read by the user (e.g., the topmost in the frame B), and where it is displayed and highlighted (step S513: Highlight pertinent part on part table page). On the other hand, when the pertinent record is not present in the parts table XML data ("NO" at step S511), a presentation that includes highlighting is not provided for the parts table page, and the processing is thereafter terminated.

In this embodiment, the same processing as in the double-screen mode has been performed, and in the triple-screen mode, a graphics primitive that is displayed in a frame differing from the frame including the selected graphics primitive must be highlighted. However, there is a case wherein a graphics primitive selected in one frame is not included in a drawing displayed in the other frame. That is, graphics primitives included in drawings displayed in the two frames C and D do not always correspond to each other. For example, for a high-density PCB (Print Circuit Board), a plurality of circuits are mounted on a single board, and N circuit diagrams may correspond to one board diagram. Therefore, when a graphics primitive is selected in a board diagram, a check is performed to determine whether the selected graphics primitive is included in a currently displayed circuit diagram. When the selected graphics primitive is not included in a currently displayed circuit diagram, a circuit diagram that includes the selected graphics primitive must be searched for and displayed, and highlighting and centering must be employed to display a graphics primitive included in the circuit diagram. A centering display here means that the circuit diagram is displayed in the frame, so that the graphics primitive is presented near the center in the frame, which is a layout position that a user can easily see (hereinafter, the centering display is also employed with the meaning that the drawing is so displayed that the graphics primitive is presented near the center of the frame).

At step S513, highlighting is employed for the display of the pertinent part on the parts table page, and then an SVG data name differing from the SVG data name obtained at step S503 is designated (at step S515: Designate SVG data name to be displayed in other frame). That is, at step S515, it is designated that SVG data be displayed in a frame different from the frame wherein the graphics primitive was selected.

Thereafter, a check is performed to determine whether the SVG data that is currently displayed in the other frame (the frame D when a graphics primitive is selected from a drawing displayed in the frame C, or the frame C when a graphics primitive is selected from a drawing displayed in the frame D), which is a different frame from the one wherein the graphics primitive was selected, is the same as the SVG data designated at step S515 (step S517: SVG data to be displayed currently being displayed in other frame?). When the currently displayed SVG data is not the same as the SVG data to be displayed, the SVG data designated at step S515 is displayed in the different frame from the one wherein the graphics primitive was selected (step S519: Display appropriate SVG data in other frame). Then, for the SVG data displayed at step S519, a graphics primitive having the same symbol number as the selected graphics primitive is displayed, highlighted, and is also displayed, centered, in the different frame (other frame) from the one wherein the graphics primitive was selected (step S521: Display graphics primitive in other frame using highlighting and centering).

In this manner, in the triple-screen mode, a graphics primitive, which has been selected in a board diagram or a circuit diagram displayed in either the frame C or D, is highlighted and displayed, and in the other frame, the same graphics primitive as the selected graphics primitive is displayed using highlighting and centering. Further, the entry for a part that is shown on the parts table page display and that corresponds to the selected graphics primitive can be highlighted and displayed in the frame B.

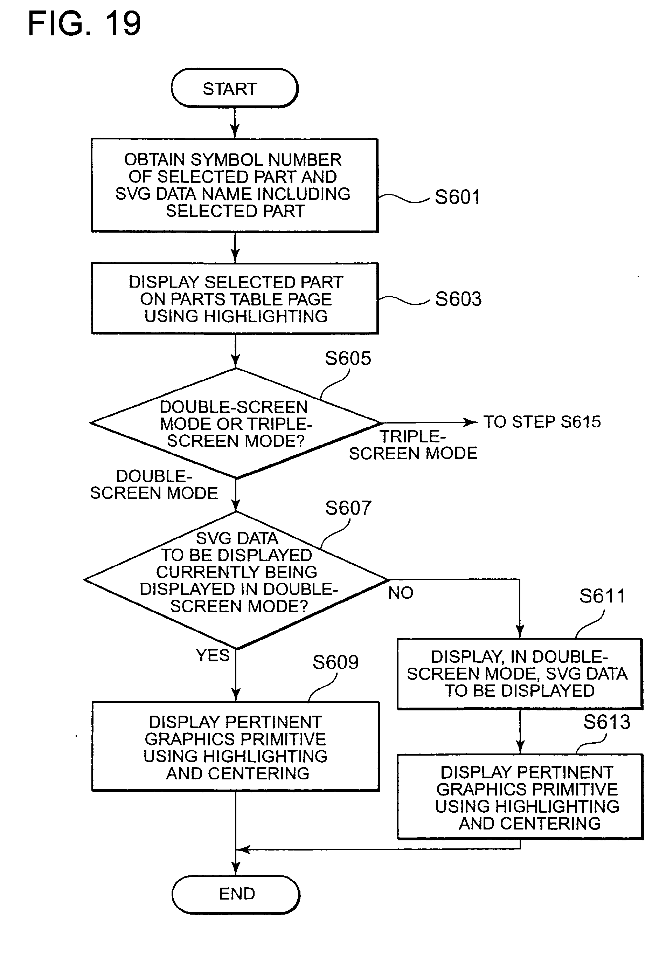

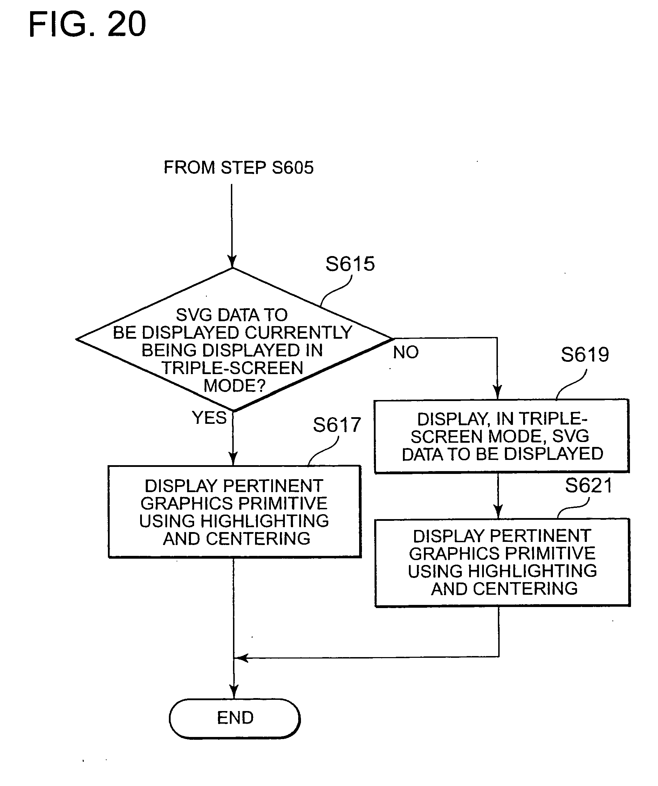

An explanation will now be given for the processing performed when a specific part is selected on the parts table page shown in the frame B. Figs. 19 and 20 are the first and second pages of a flowchart showing an overview of the display processing performed, according to the embodiment of the present invention, when a user selects a part on the parts table page in the drawing display mode.

When a user uses, for example, a mouse and selects a part on the parts table page displayed in the frame B, first, the PC examines parts table XML data and obtains the symbol number of the selected part and the SVG data name in the record for this part (step S601: Obtain symbol number of selected part and SVG data name including selected part). Further, the entry for the part selected on the parts table page is highlighted (step S603: Highlight selected part on parts table page).

There are cases wherein only one set of SVG data is entered in the record for the selected part, and wherein two sets of SVG data are entered. When only one set of SVG data is entered, it is determined that the double-screen mode should be used to display a drawing that includes the part ("Double-screen mode" at step S605). When two sets of SVG data are entered, it is determined that the triple-screen mode should be used to display a drawing that includes the part ("Triple-screen mode" at step S605).

When it is determined at step S605 that the double-screen mode should be used to display the drawing, a check is performed to determine whether the SVG data designated at step S601 is currently being displayed in the double-screen mode (step S607: SVG data to be displayed being currently displayed in double-screen mode?). When the SVG data designated at step S601 are currently being displayed in the double-screen mode ("YES" at step S607), highlighting and centering are used to display a graphics primitive having the symbol number of the selected part (step S609: Display pertinent graphics primitive by highlighting and centering). Whereas, when the SVG data designated at step S601 are not being displayed in the double-screen mode ("NO" at step S607), the double-screen mode is used to display the SVG data (step S611: Display, in double-screen mode, SVG data to be displayed), and highlighting and centering are used to display a graphics primitive having the symbol number of the selected part (step S613: Display pertinent graphics primitive by highlighting and centering).

When it is determined at step S605 that the drawing should be displayed in the triple-screen mode, a check is performed to determine whether two sets of SVG data designated at step S601 are currently being displayed in the triple-screen mode (step S615: SVG data to be displayed being currently displayed in triple-screen mode?). When the two sets of SVG data designated at step S601 are currently being displayed in the triple-screen mode ("YES" at step S615), highlighting and centering are used to display in the frames C and D a graphics primitive having the symbol number of the selected part (step S617: Display pertinent graphics primitive by highlighting and centering). Whereas, when the two sets of SVG data designated at step S601 are not currently being displayed in the triple-screen mode ("NO" at step S615), the triple-screen mode is used to display the two sets of SVG data (S619: Display, in triple-screen mode, SVG data to be displayed), and highlighting and centering are used to display in the frames C and D a graphics primitive having the symbol number of the selected part (step S621: Display pertinent graphics primitive by highlighting and centering).

An explanation will now be given for a comment function whereby a user can arbitrarily enter a comment associated with each drawing when a display (the display shown in Fig. 28 or 29) is provided in the double-screen mode or the triple screen mode explained while referring to Fig. 15. By employing the comment function, the user can add his or her memorandum to an electronic service manual, and can browse the thus entered comment.

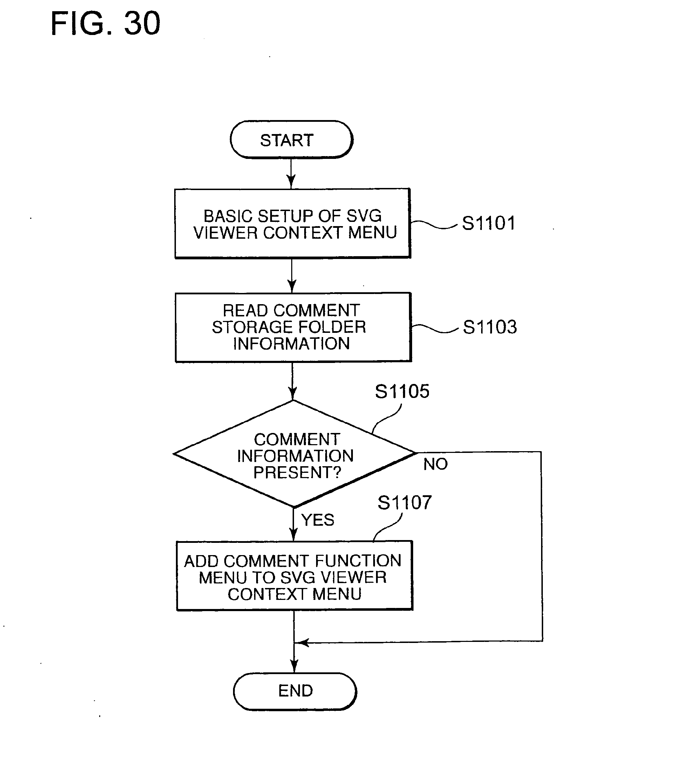

First, while referring to Fig. 30, an explanation will be given for the generation of an SVG viewer context menu that enables a search for information related to a graphics primitive selected in a drawing. Fig. 30 is a flowchart showing the processing performed for information that is the basis for the generation of an SVG viewer context menu under the display conditions in the double-screen mode or the triple-screen mode according to the embodiment of the present invention.

First, a PC displays SVG data in the double-screen mode or the triple-screen mode shown in Fig. 28 or 29, and at the same time, performs the basic setup for an SVG context menu (step S1101: Basic setup for SVG viewer context menu). For the basic setup, for example, an SVG viewer context menu that is to be displayed at an arbitrarily designated location in a drawing is set up by right clicking using a mouse, so that, specifically, various categories, such as a category that enables the switching between the enlargement and reduction of a drawing, can be displayed on the SVG viewer context menu.

Next, the PC reads comment storage folder information stored as cookie information in the PC (step S1103: Read comment storage folder information), and determines whether comment information has been already set in an electronic service manual (step S1105: Comment information present?). The comment storage folder information is information indicating whether comment information (comment XML data, which corresponds to the above-mentioned my-notes XML data) is already present in the electronic service manual that a user is currently browsing. Specifically, file names in a predetermined folder (a comment storage folder) are examined to determine whether the comment information is present in the predetermined folder.

When the comment information is present in the comment storage folder ("YES" at step S1105), a category that operates a function concerning a comment is embedded in the SVG viewer context menu (step S1107: Add comment function menu to SVG viewer context menu). On the other hand, when the comment information is not present in the comment storage folder ("NO" at step S1105), the process for embedding a function concerning a comment in the SVG viewer context menu is not performed.

When the comment function menu is embedded in the SVG viewer context menu in this manner, and when a user performs a predetermined manipulation (e.g., right clicking using the mouse), various categories, according to the basic setup and a category that can operate the function concerning a comment, are displayed on the SVG context menu.

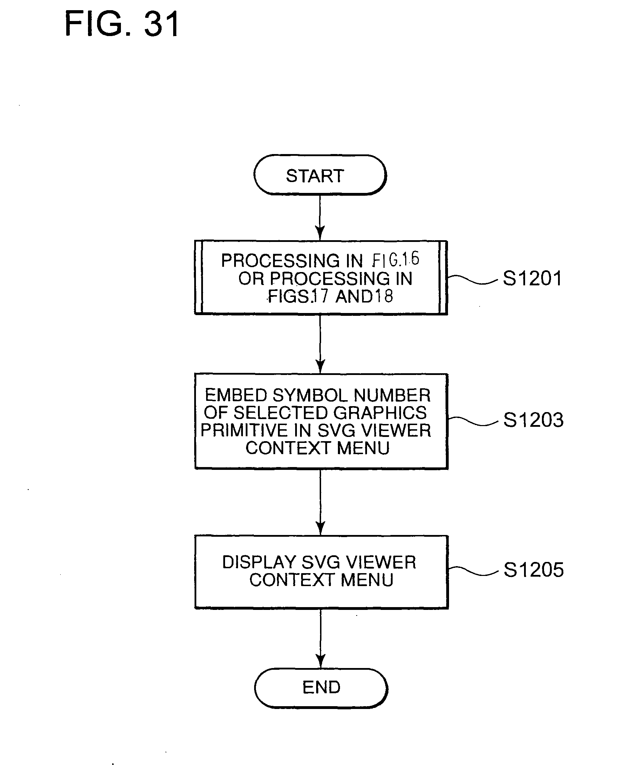

An explanation will now be given for a comment function associated with a graphics primitive selected in a drawing under the conditions wherein a display (display shown in Fig. 28 or 29) is presented in the double-screen mode or the triple-screen mode. Fig. 31 is a flowchart showing the processing for displaying the SVG viewer context menu using the comment function under the display conditions in the double-screen mode or the triple-screen mode according to the embodiment of the present invention.

When a user employs a mouse, for example, and selects a graphics primitive in SVG data (a circuit diagram or a board diagram) displayed in the frame A (double-screen mode), or either the frame C or D (triple-screen mode), the PC displays the graphics primitive or a pertinent part on the parts table page using highlighting, as explained while referring to Fig. 16 or Figs. 17 and 18 (step S1201: Processing in Fig. 16 or processing in Figs. 17 and 18). Further, information (e.g., a symbol number) related to the selected graphics primitive is embedded in the SVG viewer context menu (step S1203: Embed symbol number of selected graphics primitive in SVG viewer context menu).

When a manipulation (e.g., right clicking using a mouse) is performed in consonance with the display of an SVG viewer context menu, an SVG viewer context menu, which includes a category for the symbol numbers of the graphics primitives and various categories in accordance with the basic setup and categories related to individual Web sites indicated in the network connection destination information, is automatically generated and displayed on the display device 3 (step S1205: Display SVG viewer context menu).

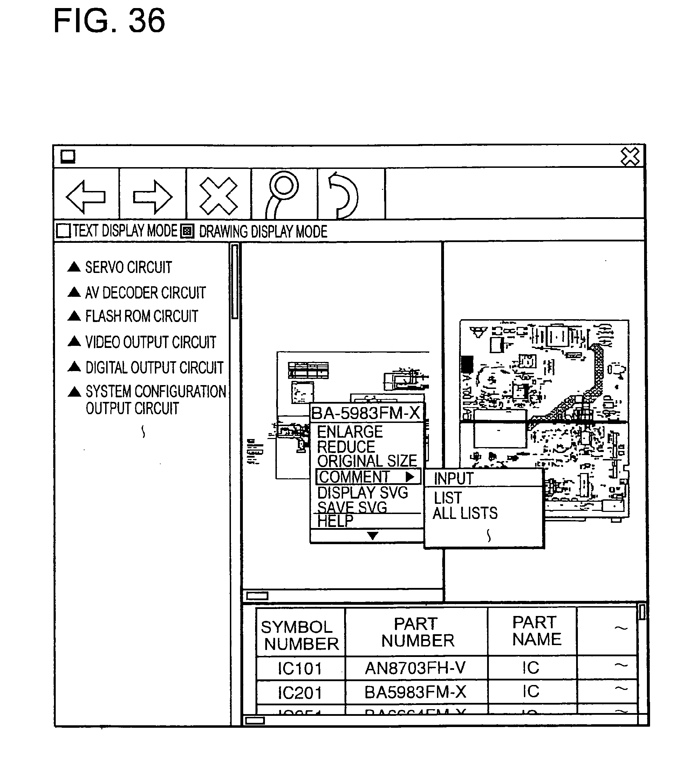

Fig. 36 is a diagram showing the state, according to the embodiment of the present invention, wherein the SVG viewer context menu is displayed on the display device. As is shown in Fig. 36, the category for the symbol number of the graphics primitive, various categories according to the basic setup, and the category related to a comment are displayed in parallel or hierarchically on the SVG viewer context menu. On the SVG viewer context menu in Fig. 36, categories "input", "list" and "all lists" are displayed in the category "comment".

When "input" is selected in the "comment" category on the SVG viewer context menu, the entry of a comment is enabled. At this time, when the SVG viewer context menu is displayed after an arbitrary graphics primitive has been selected (i.e., when right clicking has been performed on a graphics primitive in a drawing), a comment for the graphics primitive can be entered. Further, when right clicking is performed, for example, on the background portion of a drawing without a graphics primitive being selected, the SVG viewer context menu that includes the "comment" category and the "input", "list" and "all lists" categories in "comment" can be displayed. In this case, a comment for the drawing can be entered when "input" is selected in the "comment" category.

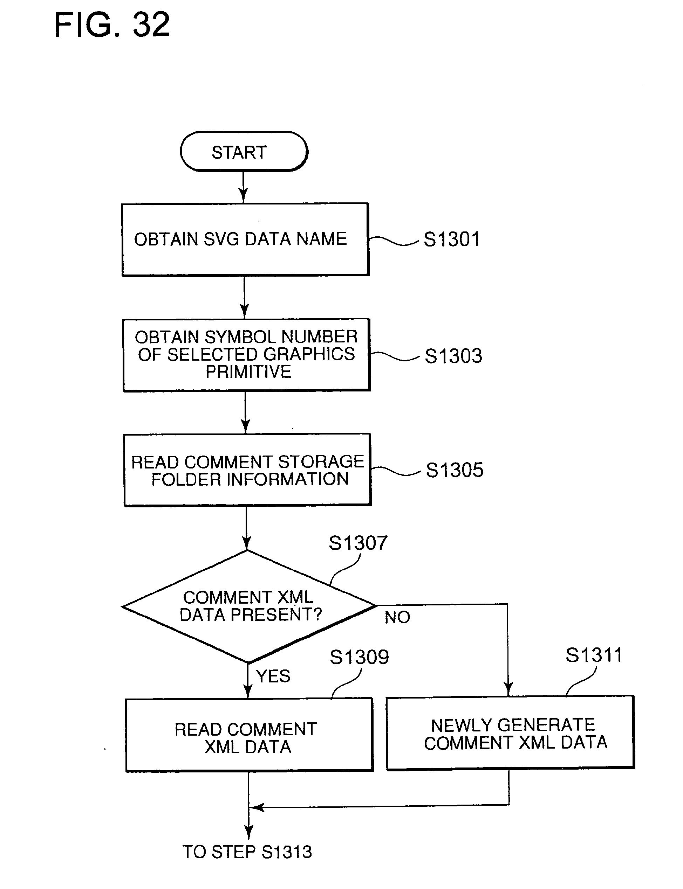

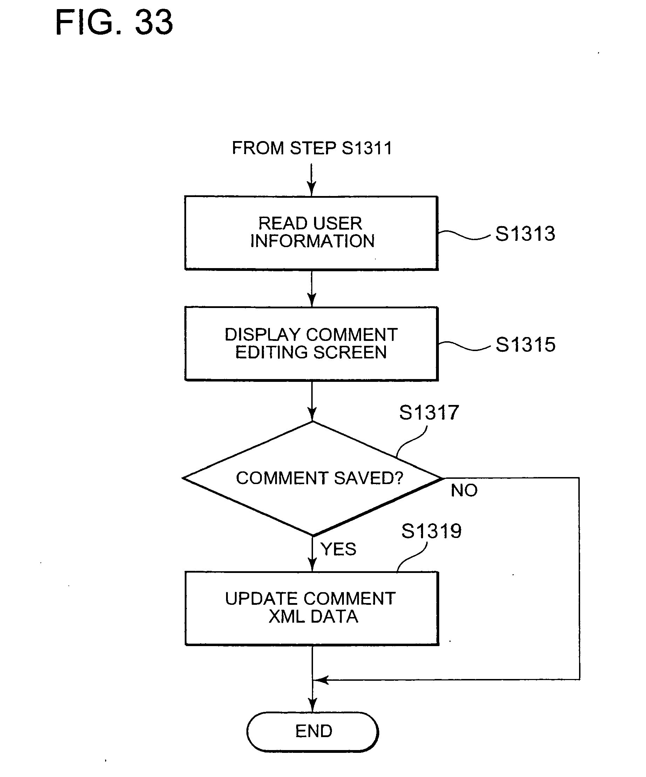

Sequentially, an explanation will be given for the processing performed when "input" is selected in the "comment" category and a comment is to be entered. Figs. 32 and 33 are first and second pages of a flowchart showing the comment input processing under the display conditions in the double-screen mode or the triple-screen mode according to the embodiment of the present invention. When "input" is selected in the "comment" category, first, the PC obtains an SVG data name that includes the selected graphics primitive (step S1301: Obtain SVG data name), and further obtains the symbol number of the selected graphics primitive (step S1303: Obtain symbol number of selected graphics primitive).

Then, comment storage folder information stored as cookie information is read (step S1305: Read comment storage folder information), and the storage location of comment XML data is written in the comment storage folder information. Thereafter, a check is performed to determine whether comment XML data is present in a folder designated by the comment storage folder (step S1307: Comment XML data present?), and when the comment XML data is present ("YES" at step S1307), the comment XML data is read (step S1309: Read comment XML data). While when the comment XML data is not present ("NO" at step S1307), comment XML data is newly generated (step S1311: Newly generate comment XML data). Furthermore, user information is read from predetermined cookie information (step S1313: Read user information). Then, the comment XML data read at step S1309 or the comment XML data generated at step S1311 are processed by using predetermined comment editing XSL data, and a comment editing screen is displayed on the display device 3 (step S1315: Display comment editing screen).

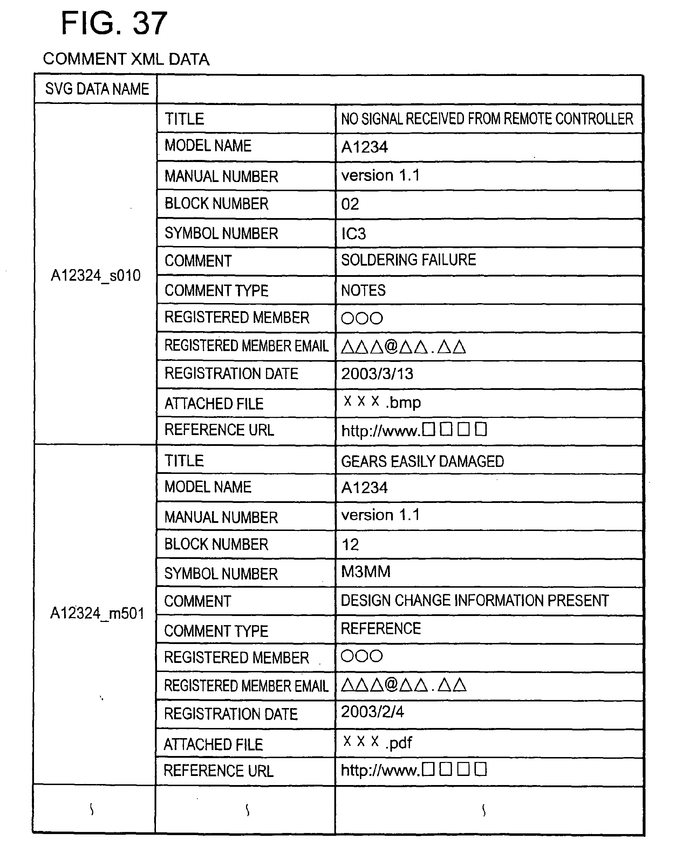

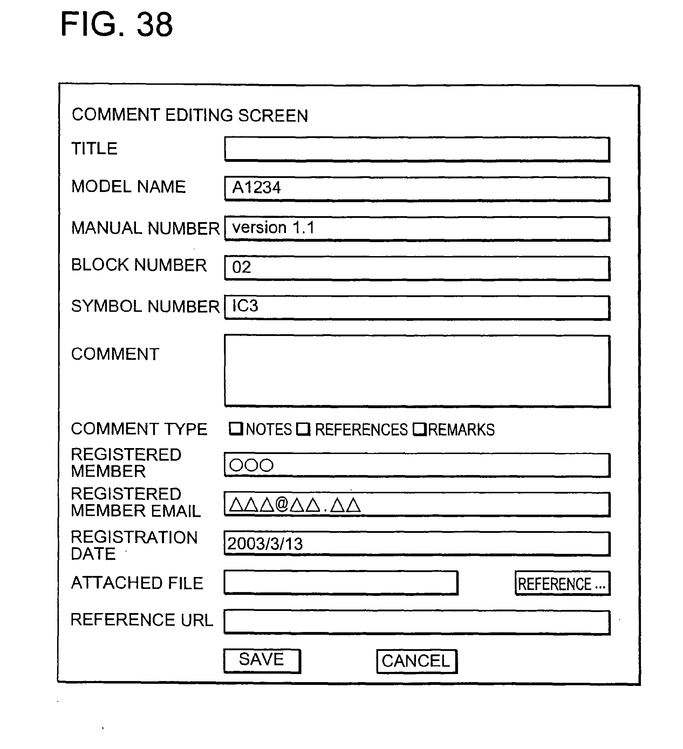

The structure of the comment XML data and the comment editing screen will now be described. Fig. 37 is a diagram showing example comment XML data according to the embodiment of the present invention, and Fig. 38 is a diagram showing an example comment editing screen according to the embodiment of the present invention. One set of comment XML data is present for one electronic service manual. The individual records in the comment XML data shown in Fig. 37 are identified by using SVG data names, and include entries for a title, a model name, a manual number, a block number, a symbol number, a comment, a comment type, a registered member, a registered member email address (registered member email in Fig. 37), a registration date, an attached file and a reference URL.

The comment editing screen in Fig. 38 includes input forms consonant with the individual entries for the records provided by the comment XML data in Fig. 37. Therefore, on the comment editing screen in Fig. 38, the input forms for a title, a model name, a manual number, a block number, a symbol number, a comment, a comment type, a registered member, a registered member email address, a registration date, an attached file and a reference URL are displayed for use for entering information to the individual categories of the comment XML data shown in Fig. 37. It should be noted that the comment editing screen shown in Fig. 38 is the initial screen as it appears before information is entered by a user.

A user can arbitrarily enter, in the title input form on the comment editing screen, information that will, for example, enable the comment to be easily identified. The model name associated with the electronic service manual, the version information for the electronic service manual, a block number provided for a selected screen and a symbol number provided for a selected graphics primitive are automatically entered by the PC as the model name, the manual number, the block number and the symbol number. These data are those described in the SVG data selected by the user. The user can also arbitrarily correct these entries.

Furthermore, a user can arbitrarily enter memoranda related to a board diagram or a circuit diagram, and graphics primitives (parts) in the comment input form on the comment editing screen. In addition, entries for notes (memoranda), references and remarks, for example, are provided as check boxes for a comment type. When one of the check boxes is selected, the type of comment to be entered in the comment input form can be designated. Further, in accordance with the user information read at step S1313, the name and the email address of the registered member are automatically entered by the PC as the registered member and the registered email address. It should be noted that the user can arbitrarily correct these entries. The date that the comment was entered (current date) is automatically entered as the registration date. Moreover, an attached file, added to the comment, and the URL information can be entered in the attached file input form and the reference URL input form on the comment editing screen.

The user employs the comment editing screen shown in Fig. 38, enters information in consonance with the above described individual input forms, and selects a save button displayed on the comment editing screen, so as to perform the input and saving of the comment. When the user has entered and saved a comment ("YES" at step S1317), the information including the comment designated on the comment editing screen is added to the comment XML data (step S1319: Update comment XML data). At this time, as is shown in Fig. 37, the information designated on the comment editing screen is correlated with the SVG data names, and is stored as the comment XML data shown in Fig. 37. When the user selects a cancel button displayed on the comment editing screen ("NO" at step S1317), the processing is terminated without saving the comment. In the above described manner, a user can freely add a comment in association with a graphics primitive that is a constituent of a drawing, and the comment entered by the user can be stored as comment XML data. Also, as in the case of entering a comment, a user can freely change the setup (e.g., a color setup) for a graphics primitive that is a constitute of a drawing. When the user has changed the setup for a graphics primitive as in the above case, the above my-drawing XML data is generated and the information on the setup change by the user is stored in the my-drawing XML data, according to the same processing as that of a comment XML data.

Next, a case wherein a user browses a comment will be explained. The browsing of a comment is enabled when a predetermined manipulation, such as right clicking, is performed on a drawing such as a circuit diagram or a board diagram while the SVG viewer context menu is displayed, and when "list" or "all lists" is selected in the "comment" category on the SVG viewer context menu. When "list" is selected, a comment concerning a selected drawing (drawing that has been right clicked) is displayed, and when "all lists" is selected, comments concerning all the drawings (comments associated with the electronic service manual) are displayed. The processing performed when a comment is to be browsed will now be described.

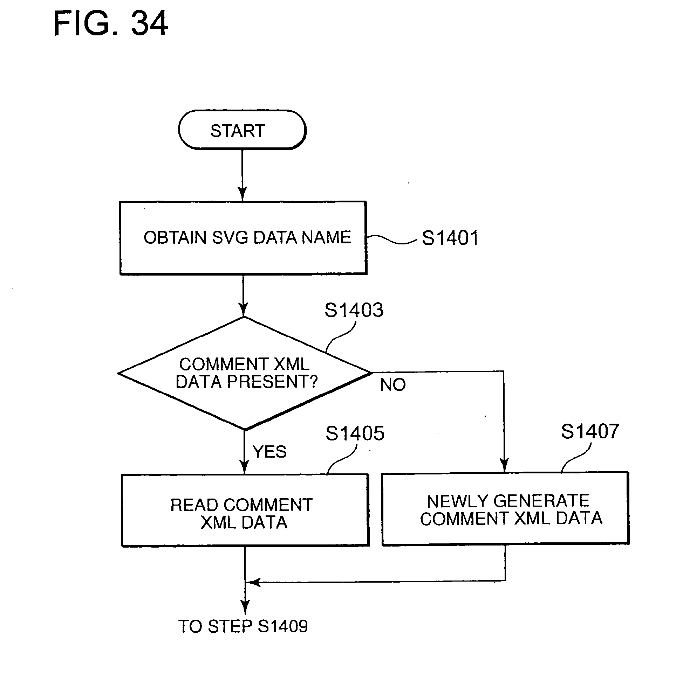

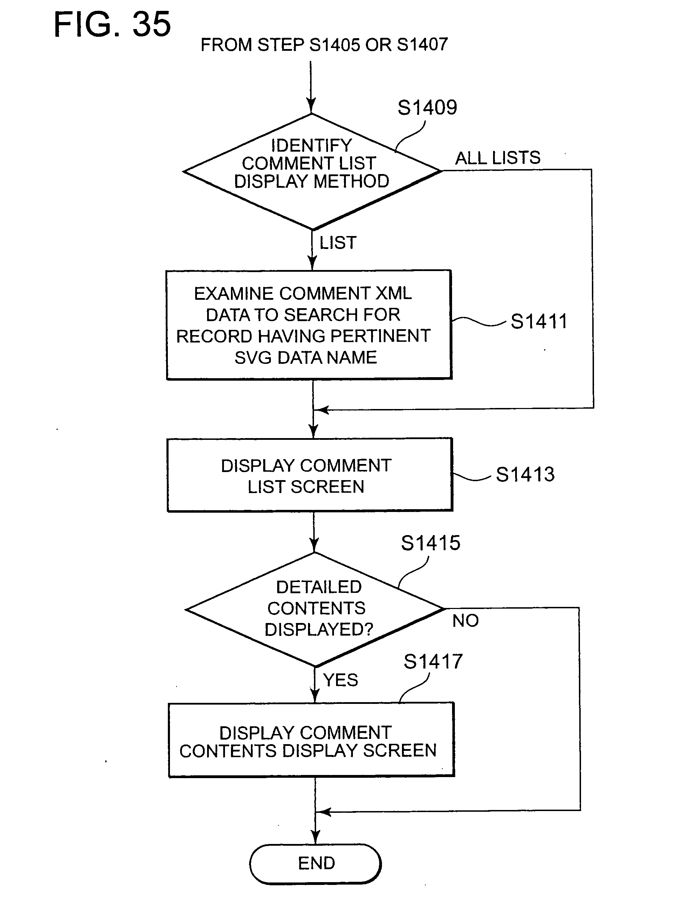

Figs. 34 and 35 are first and second pages of a flowchart showing the comment display processing under the display conditions in the double-screen mode or the triple-screen mode according to the embodiment of the present invention. When "list" or "all lists" is selected in the "comment" category, first, the PC obtains the SVG data name of a selected drawing (step S1401: Obtain SVG data name). Then, a check is performed to determine whether comment XML data are present in a comment storage folder (step S1403: Comment XML data present?). When comment XML data are present ("YES" at step S1403), the comment XML data are read (step S1405: Read comment XML data). When comment XML data are not present ("NO" at step S1403), comment XML data are newly generated (step S1407: Newly generate comment XML data).

Following this, the PC determines whether "list" in the "comment" category has been selected, or whether "all lists" in the "comment" category has been selected (step S1409: Identify comment list display method). When "list" in the "comment" category has been selected ("List" at step S1409), the comment XML data are examined to find a record having the SVG name obtained at step S1401 (step S1411: Examine comment XML data to search for record having pertinent SVG data name). On the other hand, when "all lists" in the "comment" category has bee selected ("All lists" at step S1409), it is assumed that the user desires to browse all the comments in the comment XML data, and the process of searching for a specific record is not performed.

The record found and extracted from the comment XML data (when "List" is selected) at step S1411, or all the records in the comment XML data are processed by using comment list display XSL data, and the obtained data are presented as a comment list screen on the display device 3 (step S1413: Display comment list screen).

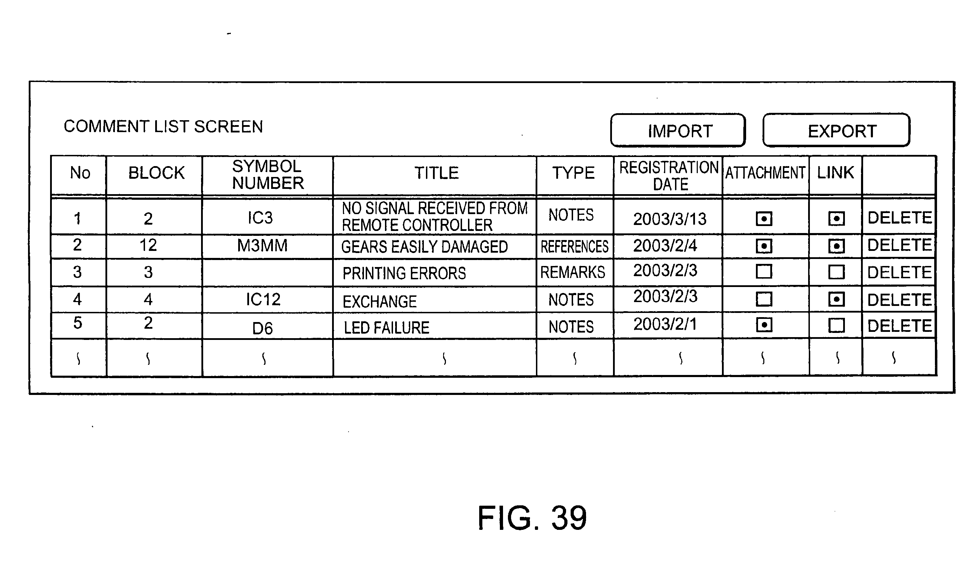

Fig. 39 is a diagram showing an example comment list screen according to the embodiment of the present invention. Information to be displayed on the comment list screen can be changed by setting the comment list display XSL data. The comment list screen shown in Fig. 39 is set up so that a number (provided for each comment, for convenience), a block number (block), a symbol number, a title, a type (a comment type), a registration date, an attachment (attached file) and the contents of a link (reference URL) are displayed on the comment list screen.

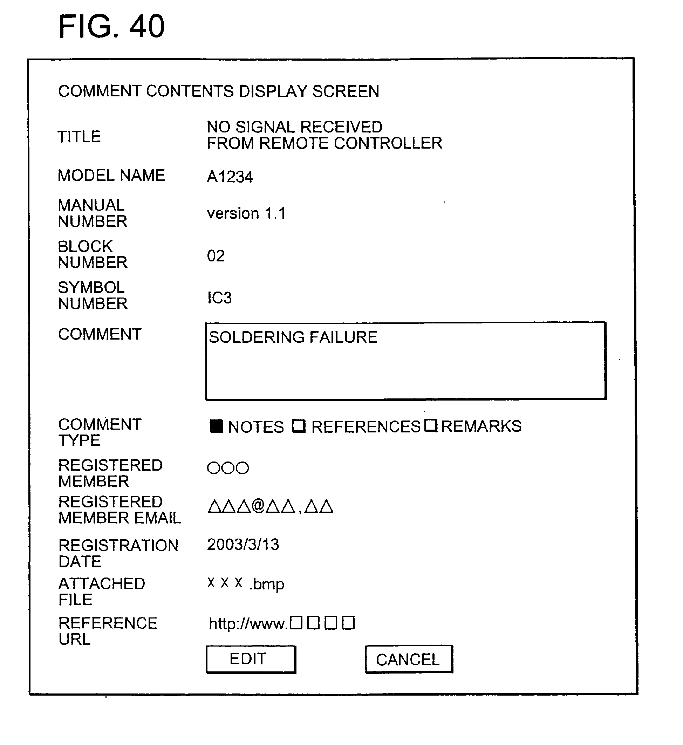

When detailed contents, such as the contents of a comment, for example, are to be displayed ("YES" at step S1415), the tile of each comment is selected, and a comment contents display screen is presented to display the detailed information as is shown in Fig. 40 (step S1417: Display comment contents display screen). Further, a comment may be re-edited on the comment contents display screen, and when the comment is re-edited, the comment XML data is updated (the same process as at step S1319) and the newly edited comment is stored in the comment XML data.

Since the comment XML data constitute a database for a text form, it is easy for part or all of the records in the comment XML data to be extracted and stored as another file, or for other comment XML data (comment XML data prepared by another user) to be coupled with the original comment XML data. An import button and an export button are displayed on the comment list screen in Fig. 39, and when the import button is selected, the file of other comment XML data can be selected, and the contents of own comment XML data can be coupled with the contents of the original comment XML data for storage as the new original comment XML data. The newly prepared comment XML data then includes the contents of both the original comment XML data and the other comment XML data. And when the export button is selected, part or all of the original XML data can be stored as another file in an arbitrary directory or on an arbitrary recording medium.

### INDUSTRIAL APPLICABILITY

According to the present invention, the electronic service manual generation method, the electronic service manual generation apparatus, the electronic service manual generation program and the recording medium on which this program is recorded obtain the effects that a permit a useful electronic service manual to be generated, and can be applied as a technique for generating an electronic service manual that furnishes detailed information for use as a reference when performing an inspection or when providing maintenance and repair servicing for products that include an electric circuit or an electronic circuit. Further, according to the present invention, the additional data generation method, the additional data generation apparatus, the additional data generation program and the recording medium on which this program is recorded provide such effects that, when used as an electronic service manual, additional data can be generated that can clearly represent a correlation between additional information entered by a user and the contents of the electronic service manual, and can be applied as a technique for processing information added by a user to an electronic service manual.

## Claims

1. An electronic service manual generation method, for permitting a computer to generate an electronic service manual that includes document information and drawing information related to a predetermined product that includes an electric circuit, or an electronic circuit, that employs parts as components, comprising:
an original data acquisition step of the computer obtaining original data serving as contents of the electronic service manual;
a structure definition acquisition step of the computer obtaining structure definition information, in which a structure definition for the electronic service manual is described and which is stored at a location the computer is capable of referencing; and
a structured data generation step of, based on the structure definition information obtained at the structure definition acquisition step, the computer employing the original data obtained at the original data acquisition step to generate structured data that is constituent data of the electronic service manual and that conforms to the structure definition.

2. The electronic service manual generation method according to claim 1,
whereby, when, at the original data acquisition step, data that serves as main text for the electronic service manual is obtained as the original data at the structure definition acquisition step, main text structure definition information in which a structure definition related to the main text is described is obtained as the structure definition information;
whereby, when, at the original data acquisition step, drawing data in which parts used for the predetermined product are illustrated are obtained as the original data, at the structure definition acquisition step, drawing structure definition information in which a structure definition related to the drawing is described is obtained as the structure definition information;
whereby, when, at the original data acquisition step, parts table data in which a list of the parts used for the predetermined product is described are obtained as the original data, at the structure definition acquisition step, parts table structure definition information, in which a structure definition related to the parts table is described, is obtained as the structure definition information; and
whereby, when, at the original data acquisition step, voltage value table data, in which a list of voltage values for the electric circuit or the electronic circuit used in the predetermined product is described, are obtained as the original data, at the structure definition acquisition step, voltage value table structure definition information, in which a structure definition related to the voltage value table is described, is obtained as the structure definition information.

3. The electronic service manual generation method according to claim 1,
whereby, when, at the original data acquisition step, data that serves as main text for the electronic service manual is obtained as the original data at the structure definition acquisition step, main text structure definition information in which a structure definition related to the main text is described is obtained as the structure definition information;
whereby, when, at the original data acquisition step, drawing data in which parts used for the predetermined product are illustrated are obtained as the original data, at the structure definition acquisition step, drawing structure definition information in which a structure definition related to the drawing is described is obtained as the structure definition information;
whereby, when, at the original data acquisition step, parts table data in which a list of the parts used for the predetermined product is described are obtained as the original data, at the structure definition acquisition step, parts table structure definition information, in which a structure definition related to the parts table is described, is obtained as the structure definition information;
whereby, when, at the original data acquisition step, IC function table data in which a list of functions of ICs employed for the predetermined product is described are obtained as the original data, at the structure definition acquisition step, IC function table structure definition information, in which a structure definition related to the IC function table is described, is obtained as the structure definition information; and
whereby, when, at the original data acquisition step, voltage value table data, in which a list of voltage values for the electric circuit or the electronic circuit used in the predetermined product is described, are obtained as the original data, at the structure definition acquisition step, voltage value table structure definition information, in which a structure definition related to the voltage value table is described, is obtained as the structure definition information.

4. The electronic service manual generation method according to claim 1,
whereby, when document data is obtained as the original data at the original data acquisition step, at the structured data generation step, the structured data, in an XML format, is generated by using the document data; and
whereby, when drawing data is obtained as the original data at the original data acquisition step, at the structured data generation step, the structured data are generated in an SVG format or an SVGZ format by using the drawing data.

5. The electronic service manual generation method according to claim 1, comprising:
a parts-drawing correlation reference step, when at the original data acquisition step parts table data, in which a list of the parts used for the predetermined product is described, and parts drawing data that includes drawings related to the parts are obtained as the original data, of the computer comparing individual parts included in the list of the parts with the drawings wherein the individual parts are illustrated, and generating parts-drawing correlation information that includes the comparison results; and
a parts-drawing correlation addition step of, based on the parts-drawings correlation information generated at the parts-drawings correlation reference step, the computer embedding, in the parts table data, information about the parts written in the parts table data and the drawings that correspond to the parts.

6. The electronic service manual generation method according to claim 1, comprising:
a parts-IC correlation reference step, when at the original data acquisition step parts table data, in which the list of the parts is written, and IC function table data, in which a list of functions of ICs employed for the predetermined product is written, are obtained as the original data, of the computer comparing individual parts included in the parts list with the functions of individual ICs in the list of the IC functions and generating parts-IC functions correlation information that includes the comparison results; and
a parts-IC correlation addition step, of, based on the parts-IC functions correlation information generated at the parts-IC correlation reference step, the computer embedding, in the parts table data, information about the parts written in the parts table data and about the IC functions that correspond to the parts.

7. An additional data generation method, for a computer that displays, on a display unit, an electronic service manual that includes document information and drawing information related to a predetermined product that includes an electric circuit or an electronic circuit that employs parts as components, whereby, when a user who browses the electronic service manual displayed on the display unit enters, into the computer, additional information related to the electronic service manual, the computer generates additional data based on the additional information, comprising:
a structure definition acquisition step of the computer obtaining structure definition information, in which a structure definition related to the additional information entered by the user is described and which is stored at a location the computer is capable of referencing; and
a structured data generation step of, based on the structure definition information obtained at the structure definition acquisition step, the computer employing the additional information to generate structured data that conforms to the structure definition.

8. The additional data generation method according to claim 7,
whereby, when a comment by the user is entered into the computer the additional information, at the structure definition acquisition step, my-note structure definition information, in which a structure definition related to the comment is described, is obtained as the structure definition information; and
whereby, when display setup change information for a graphics primitive included in a drawing for the electronic service manual is entered into the computer as the additional information, at the structure definition acquisition step, my-drawing structure definition information, in which a structure definition related to the display setup change information is described, is obtained as the structure definition information.

9. An electronic service manual generation program, for permitting a computer to generate an electronic service manual that includes document information and drawing information related to a predetermined product that includes an electric circuit, or an electronic circuit, that employs parts as components, and for permitting the computer to execute:
an original data acquisition step of obtaining original data serving as contents of the electronic service manual;
a structure definition acquisition step of obtaining structure definition information, in which a structure definition for the electronic service manual is described and which is stored at a location the computer is capable of referencing; and
a structured data generation step of, based on the structure definition information obtained at the structure definition acquisition step, employing the original data obtained at the original data acquisition step to generate structured data that is constituent data of the electronic service manual and that conforms to the structure definition.

10. The electronic service manual generation program according to claim 9,
whereby, when, at the original data acquisition step, data that serves as main text for the electronic service manual is obtained as the original data at the structure definition acquisition step, main text structure definition information in which a structure definition related to the main text is described is obtained as the structure definition information;
whereby, when, at the original data acquisition step, drawing data in which parts used for the predetermined product are illustrated are obtained as the original data, at the structure definition acquisition step, drawing structure definition information in which a structure definition related to the drawing is described is obtained as the structure definition information;
whereby, when, at the original data acquisition step, parts table data in which a list of the parts used for the predetermined product is described are obtained as the original data, at the structure definition acquisition step, parts table structure definition information, in which a structure definition related to the parts table is described, is obtained as the structure definition information; and
whereby, when, at the original data acquisition step, voltage value table data, in which a list of voltage values for the electric circuit or the electronic circuit used in the predetermined product is described, are obtained as the original data, at the structure definition acquisition step, voltage value table structure definition information, in which a structure definition related to the voltage value table is described, is obtained as the structure definition information.

11. The electronic service manual generation program according to claim 9,
whereby, when, at the original data acquisition step, data that serves as main text for the electronic service manual is obtained as the original data at the structure definition acquisition step, main text structure definition information in which a structure definition related to the main text is described is obtained as the structure definition information;
whereby, when, at the original data acquisition step, drawing data in which parts used for the predetermined product are illustrated are obtained as the original data, at the structure definition acquisition step, drawing structure definition information in which a structure definition related to the drawing is described is obtained as the structure definition information;
whereby, when, at the original data acquisition step, parts table data in which a list of the parts used
for the predetermined product is described are obtained as the original data, at the structure definition acquisition step, parts table structure definition information, in which a structure definition related to the parts table is described, is obtained as the structure definition information;
whereby, when, at the original data acquisition step, IC function table data in which a list of functions of ICs employed for the predetermined product is described are obtained as the original data, at the structure definition acquisition step, IC function table structure definition information, in which a structure definition related to the IC function table is described, is obtained as the structure definition information; and
whereby, when, at the original data acquisition step, voltage value table data, in which a list of voltage values for the electric circuit or the electronic circuit used in the predetermined product is described, are obtained as the original data, at the structure definition acquisition step, voltage value table structure definition information, in which a structure definition related to the voltage value table is described, is obtained as the structure definition information.

12. The electronic service manual generation program according to claim 9,
whereby, when document data is obtained as the original data at the original data acquisition step, at the structured data generation step, the structured data, in an XML format, is generated by using the document data; and
whereby, when drawing data is obtained as the original data at the original data acquisition step, at the structured data generation step, the structured data are generated in an SVG format or an SVGZ format by using the drawing data.

13. The electronic service manual generation program according to claim 9, for permitting the computer to execute:
a parts-drawing correlation reference step, when at the original data acquisition step parts table data, in which a list of the parts used for the predetermined product is described, and parts drawing data that includes drawings related to the parts are obtained as the original data, of comparing individual parts included in the list of the parts with the drawings wherein the individual parts are illustrated, and generating parts-drawing correlation information that includes the comparison results; and
a parts-drawing correlation addition step, based on the parts-drawings correlation information generated at the parts-drawings correlation reference step, of embedding, in the parts table data, information about the parts written in the parts table data and the drawings that correspond to the parts.

14. The electronic service manual generation program according to claim 9, for permitting the computer to execute:
a parts-IC correlation reference step, when at the original data acquisition step parts table data, in which the list of the parts is written, and IC function table data, in which a list of functions of ICs employed for the predetermined product is written, are obtained as the original data, of comparing individual parts included in the parts list with the functions of individual ICs in the list of the IC functions and generating parts-IC functions correlation information that includes the comparison results; and
a parts-IC correlation addition step, based on the parts-IC functions correlation information generated at the parts-IC correlation reference step, of embedding, in the parts table data, information about the parts written in the parts table data and about the IC functions that correspond to the parts.

15. An additional data generation program, which can be executed by a computer that displays, on a display unit, an electronic service manual that includes document information and drawing information related to a predetermined product that includes an electric circuit or an electronic circuit that employs parts as components, which permits the computer to generate additional data based on additional information when a user who browses the electronic service manual displayed on the display unit enters, into the computer, the additional information related to the electronic service manual, and which permits the computer to execute:
a structure definition acquisition step of obtaining structure definition information, in which a structure definition related to the additional information entered by the user is described and which is stored at a location the computer is capable of referencing; and
a structured data generation step of, based on the structure definition information obtained at the structure definition acquisition step, employing the additional information to generate structured data that conforms to the structure definition.

16. The additional data generation program according to claim 15,
whereby, when a comment by the user is entered into the computer the additional information, at the structure definition acquisition step, my-notes structure definition information, in which a structure definition related to the comment is described, is obtained as the structure definition information; and
whereby, when display setup change information for a graphics primitive included in a drawing for the electronic service manual is entered into the computer as the additional information, at the structure definition acquisition step, my-drawings structure definition information, in which a structure definition related to the display setup change information is described, is obtained as the structure definition information.

17. An electronic service manual generation apparatus, for generating an electronic service manual that includes document information and drawing information related to a predetermined product that includes an electric circuit, or an electronic circuit, that employs parts as components, comprising:
original data acquisition means, for obtaining original data serving as contents of the electronic service manual;
structure definition acquisition means, for obtaining structure definition information, in which a structure definition for the electronic service manual is described and which is stored at a location that is capable of being referenced; and
structured data generation means for, based on the structure definition information obtained by the structure definition acquisition means, employing the original data obtained by the original data acquisition means to generate structured data that is constituent data of the electronic service manual and that conforms to the structure definition.

18. The electronic service manual generation apparatus according to claim 17,
wherein, when the original data acquisition means obtains, as the original data, data that serves as main text for the electronic service manual, the structure definition acquisition means obtains, as the structure definition information, main text structure definition information in which a structure definition related to the main text is described;
wherein, when the original data acquisition means obtains, as the original data, drawing data in which parts used for the predetermined product are illustrated, the structure definition acquisition means obtains, as the structure definition information, drawing structure definition information in which a structure definition related to the drawing is described;
wherein, when the original data acquisition means obtains, as the original data, parts table data in which a list of the parts used for the predetermined product is described, the structure definition acquisition means obtains, as the structure definition information, parts table structure definition information, in which a structure definition related to the parts table is described; and
wherein, when the original data acquisition means obtains, as the original data, voltage value table data, in which a list of voltage values for the electric circuit or the electronic circuit used in the predetermined product is described, the structure definition acquisition means obtains, as the structure definition information, voltage value table structure definition information, in which a structure definition related to the voltage value table is described.

19. The electronic service manual generation apparatus according to claim 17,
wherein, when the original data acquisition means obtains, as the original data, data that serves as main text for the electronic service manual, the structure definition acquisition means obtains, as the structure definition information, main text structure definition information in which a structure definition related to the main text is described;
wherein, when the original data acquisition means obtains, as the original data, drawing data in which parts used for the predetermined product are illustrated, the structure definition acquisition means obtains, as the structure definition information, drawing structure definition information in which a structure definition related to the drawing is described;
wherein, when the original data acquisition means obtains, as the original data, parts table data in which a list of the parts used for the predetermined product is described, the structure definition acquisition means obtains, as the structure definition information, parts table structure definition information, in which a structure definition related to the parts table is described;
wherein, when the original data acquisition means obtains, as the original data, IC function table data in which a list of functions of ICs employed for the predetermined product is described, the structure definition acquisition means obtains, as the structure definition information, IC function table structure definition information, in which a structure definition related to the IC function table is described; and
wherein, when the original data acquisition means obtains, as the original data, voltage value table data, in which a list of voltage values for the electric circuit or the electronic circuit used in the predetermined product is described, the structure definition acquisition means obtains, as the structure definition information, voltage value table structure definition information, in which a structure definition related to the voltage value table is described.

20. The electronic service manual generation apparatus according to claim 17,
wherein, when document data is obtained as the original data by the original data acquisition means, the structured data generation means generates the structured data, in an XML format, by using the document data; and
wherein, when drawing data is obtained as the original data by the original data acquisition means, the structured data generation means generates the structured data, in an SVG format or an SVGZ format, by using the drawing data.

21. The electronic service manual generation apparatus according to claim 17, comprising:
parts-drawing correlation reference means for, when the original data acquisition means obtains, as the original data, parts table data, in which a list of the parts used for the predetermined product is described, and parts drawing data that includes drawings related to the parts, comparing individual parts included in the list of the parts with the drawings wherein the individual parts are illustrated, and for generating parts-drawing correlation information that includes the comparison results; and
parts-drawing correlation addition means for, based on the parts-drawings correlation information generated at the parts-drawings correlation reference step, embedding, in the parts table data, information about the parts written in the parts table data and the drawings that correspond to the parts.

22. The electronic service manual generation apparatus according to claim 17, comprising:
parts-IC correlation reference means for, when the original data acquisition means obtains, as the original data, parts table data, in which the list of the parts is written, and IC function table data, in which a list of functions of ICs employed for the predetermined product is written, comparing individual parts included in the parts list with the functions of individual ICs in the list of the IC functions, and for generating parts-IC functions correlation information that includes the comparison results; and
parts-IC correlation addition means for, based on the parts-IC functions correlation information generated by the parts-IC correlation reference means, embedding, in the parts table data, information about the parts written in the parts table data and about the IC functions that correspond to the parts.

23. An additional data generation apparatus, for displaying, on a display unit, an electronic service manual that includes document information and drawing information related to a predetermined product that includes an electric circuit or an electronic circuit that employs parts as components, and for generating additional data based on additional information when a user who browses the electronic service manual displayed on the display unit enters, into the computer, the additional information related to the electronic service manual, comprising:
structure definition acquisition means, for obtaining structure definition information, in which a structure definition related to the additional information entered by the user is described and which is stored at a location that is capable of being referenced; and
structured data generation means for, based on the structure definition information obtained at the structure definition acquisition step, employing the additional information to generate structured data that conforms to the structure definition.

24. The additional data generation apparatus according to claim 23,
wherein, when a comment by the user is entered into the computer the additional information, the structure definition acquisition means obtains, as the structure definition information, my-notes structure definition information, in which a structure definition related to the comment is described; and
wherein, when display setup change information for a graphics primitive included in a drawing for the electronic service manual is entered into the computer as the additional information, the structure definition acquisition means obtains, as the structure definition information, my-drawings structure definition information, in which a structure definition related to the display setup change information is described.

25. A recording medium on which recorded is an electronic service manual generation program, for permitting a computer to generate an electronic service manual that includes document information and drawing information related to a predetermined product that includes an electric circuit, or an electronic circuit, that employs parts as components, and for permitting the computer to execute:
an original data acquisition step of obtaining original data serving as contents of the electronic service manual;
a structure definition acquisition step of obtaining structure definition information, in which a structure definition for the electronic service manual is described and which is stored at a location the computer is capable of referencing; and
a structured data generation step of, based on the structure definition information obtained at the structure definition acquisition step, employing the original data obtained at the original data acquisition step to generate structured data that is constituent data of the electronic service manual and that conforms to the structure definition.

26. The recording medium on which recorded is an electronic service manual generation program according to claim 25,
whereby, when, at the original data acquisition step, data that serves as main text for the electronic service manual is obtained as the original data at the structure definition acquisition step, main text structure definition information in which a structure definition related to the main text is described is obtained as the structure definition information;
whereby, when, at the original data acquisition step, drawing data in which parts used for the predetermined product are illustrated are obtained as the original data, at the structure definition acquisition step, drawing structure definition information in which a structure definition related to the drawing is described is obtained as the structure definition information;
whereby, when, at the original data acquisition step, parts table data in which a list of the parts used for the predetermined product is described are obtained as the original data, at the structure definition acquisition step, parts table structure definition information, in which a structure definition related to the parts table is described, is obtained as the structure definition information; and
whereby, when, at the original data acquisition step, voltage value table data, in which a list of voltage values for the electric circuit or the electronic circuit used in the predetermined product is described, are obtained as the original data, at the structure definition acquisition step, voltage value table structure definition information, in which a structure definition related to the voltage value table is described, is obtained as the structure definition information.

27. The recording medium on which recorded is an electronic service manual generation program according to claim 25,
whereby, when, at the original data acquisition step, data that serves as main text for the electronic service manual is obtained as the original data at the structure definition acquisition step, main text structure definition information in which a structure definition related to the main text is described is obtained as the structure definition information;
whereby, when, at the original data acquisition step, drawing data in which parts used for the predetermined product are illustrated are obtained as the original data, at the structure definition acquisition step, drawing structure definition information in which a structure definition related to the drawing is described is obtained as the structure definition information;
whereby, when, at the original data acquisition step, parts table data in which a list of the parts used for the predetermined product is described are obtained as the original data, at the structure definition acquisition step, parts table structure definition information, in which a structure definition related to the parts table is described, is obtained as the structure definition information;
whereby, when, at the original data acquisition step, IC function table data in which a list of functions of ICs employed for the predetermined product is described are obtained as the original data, at the structure definition acquisition step, IC function table structure definition information, in which a structure definition related to the IC function table is described, is obtained as the structure definition information; and
whereby, when, at the original data acquisition step, voltage value table data, in which a list of voltage values for the electric circuit or the electronic circuit used in the predetermined product is described, are obtained as the original data, at the structure definition acquisition step, voltage value table structure definition information, in which a structure definition related to the voltage value table is described, is obtained as the structure definition information.

28. The recording medium on which recorded is an electronic service manual generation program according to claim 25,
whereby, when document data is obtained as the original data at the original data acquisition step, at the structured data generation step, the structured data, in an XML format, is generated by using the document data; and
whereby, when drawing data is obtained as the original data at the original data acquisition step, at the structured data generation step, the structured data are generated in an SVG format or an SVGZ format by using the drawing data.

29. The recording medium on which recorded is an electronic service manual generation program according to claim 25 that permits the computer to execute:
a parts-drawing correlation reference step, when at the original data acquisition step parts table data, in which a list of the parts used for the predetermined product is described, and parts drawing data that includes drawings related to the parts are obtained as the original data, of comparing individual parts included in the list of the parts with the drawings wherein the individual parts are illustrated, and generating parts-drawing correlation information that includes the comparison results; and
a parts-drawing correlation addition step, based on the parts-drawings correlation information generated at the parts-drawings correlation reference step, of embedding, in the parts table data, information about the parts written in the parts table data and the drawings that correspond to the parts.

30. The recording medium on which recorded is an electronic service manual generation program according to claim 25 that permits the computer to execute:
a parts-IC correlation reference step, when at the original data acquisition step parts table data, in which the list of the parts is written, and IC function table data, in which a list of functions of ICs employed for the predetermined product is written, are obtained as the original data, of comparing individual parts included in the parts list with the functions of individual ICs in the list of the IC functions and generating parts-IC functions correlation information that includes the comparison results; and
a parts-IC correlation addition step, based on the parts-IC functions correlation information generated at the parts-IC correlation reference step, of embedding, in the parts table data, information about the parts written in the parts table data and about the IC functions that correspond to the parts.

31. A recording medium on which recorded is an additional data generation program, which can be executed by a computer that displays, on a display unit, an electronic service manual that includes document information and drawing information related to a predetermined product that includes an electric circuit or an electronic circuit that employs parts as components, which permits the computer to generate additional data based on additional information when a user who browses the electronic service manual displayed on the display unit enters, into the computer, the additional information related to the electronic service manual, and which permits the computer to execute:
a structure definition acquisition step of obtaining structure definition information, in which a structure definition related to the additional information entered by the user is described and which is stored at a location the computer is capable of referencing; and
a structured data generation step of, based on the structure definition information obtained at the structure definition acquisition step, employing the additional information to generate structured data that conforms to the structure definition.

32. The recording medium on which recorded is an additional data generation program according to claim 31,
whereby, when a comment by the user is entered into the computer the additional information, at the structure definition acquisition step, my-notes structure definition information, in which a structure definition related to the comment is described, is obtained as the structure definition information; and
whereby, when display setup change information for a graphics primitive included in a drawing for the electronic service manual is entered into the computer as the additional information, at the structure definition acquisition step, my-drawings structure definition information, in which a structure definition related to the display setup change information is described, is obtained as the structure definition information.
